Europäisches Patentamt

European Patent Office

Office européen des brevets

(19)

(11) Publication number: **0 242 409**
**B1**

# EUROPEAN PATENT SPECIFICATION

(12)

(45) Date of publication of the patent specification:
18.07.90

(51) Int. Cl.⁵: **B65G 1/133**

(21) Application number: **86105298.3**

(22) Date of filing: **17.04.86**

(54) Goods-storing system.

(43) Date of publication of application:
**28.10.87 Bulletin 87/44**

(45) Publication of the grant of the patent:
**18.07.90 Bulletin 90/29**

(84) Designated Contracting States:
**CH DE FR GB LI SE**

(56) References cited:
**FR-A- 2 533 198**
**FR-A- 2 547 799**
**GB-A- 1 516 120**
**US-A- 3 719 288**
**US-A- 4 509 893**

(73) Proprietor: **Itokikosakusho Co., Ltd.,**
**1-4-18 Imafukuhigashi, Joto-ku Osaka(JP)**

(72) Inventor: **Fukuda, Joji, 1-20-15-301 Higashinakaburi,**
**Hirakata-city Osaka(JP)**
Inventor: **Matsuda, Kuniharu, 3-5-51 Ohji, Kusatsu-city**
**Shiga(JP)**
Inventor: **Takamatsu, Shunichi, 2-7-26 Shimizugaoka,**
**Sumiyoshi-ku Osaka(JP)**
Inventor: **Maekawa, Kinshi, 3-1039 1-7 Shinmori,**
**Asahi-ku Osaka(JP)**
Inventor: **Murata, Harumi, 5-2 Shiratori-cho,**
**Ohmihachiman-city Siga(JP)**

(74) Representative: **Vossius & Partner,**
**Siebertstrasse 4 P.O. Box 86 07 67,**
**D-8000 München 86(DE)**

ACTORUM AG

## Description

The present invention relates to a goods-storing system for taking-in and taking-out goods by moving goods-storing bodies, such as containers or the like, by endless conveyors, such as chain conveyors, turning horizontally.

Conventionally, there has been known a goods-storing system in which containers for storing goods or the like are separately mounted, through corresponding trays or the like, onto respectively corresponding endless chains disposed horizontally and arranged in a plurality of steps, for example, a goods-storing system for storing various parts of a machine. In such a system, taking-in and taking-out of the container on respective step is performed by a carry-out unit disposed at a suitable position around the storing system. The carry-out unit has a station movable up and down. The container or the like on the respective step is taken out or taken into by moving of the station up or down to a necessary height. Accordingly, there is such a problem that when a lot of containers are taken out successively, it takes a considerably long time for moving the station, resulting in prolonged waiting time losses.

US-A 4 509 893 relates to a device for storing and retrieving articles in a shelf-stack, and corresponds to the first part of Claim 1.

An article handling and pushing device located on one side of a set of stacked shelves, is movable vertically, and includes a transfer shelf which can be brought to oppose any selected one of the stacked shelves by such vertical motion and also a push arm for moving articles from the transfer shelf away from the handling and pushing device onto the currently selected opposed one of the stacked shelves. An article pushing out device located on the other side of the shelves, is also movable vertically, also can be brought to oppose any selected one of the stacked shelves by such vertical motion, and includes an air cylinder for pushing articles off from the currently selected one of the stacked shelves away from itself. A raising device moves both the article handling and pushing device and the pushing out device vertically, and keeps both of them at substantially the same height at all times.

It is therefore an object of the present invention to provide a goods-storing system in which the time taken for taking in and taking-out goods is shortened.

It is another object of the present invention to provide a goods-storing system which comprises a carry-out stand and a carry-out unit which are easy in operation and which can move a container accurately and surely. The above objects are achieved by the features of claim 1. The dependent claims are directed to preferred embodiments.

According to the present invention, in the goods-storing system in which goods are taken-in or taken-out by moving goodsstoring bodies, such as containers or the like, by means of a horizontally turning endless conveyor such as a chain conveyor, the system comprising a taking-out port and a taking-in port provided on the side of each of rotary shelves arranged in a plurality of steps; a conveyor provided between both the taking-in and taking-out ports to connect therebetween; and a carry-out unit or a combination of a carry-out stand and a carry-out unit disposed between each of the opposite ends of the conveyor and each of the taking-out and taking-in ports to make it possible to perform delivery of containers, whereby it is possible to use the rotary shelves and the carry-out unit efficiently to shorten the time taken for taking-out and taking-in goods.

The above and other objects and features of the invention will appear more fully hereinafter from a consideration of the following description taken in connection with the accompanying drawings.

Fig.1 is a plan view of an embodiment of the system according to the present invention;
Fig. 2 is a front view of the same system;
Fig. 3 is a plan view of another embodiment of the system according to the present invention;
Fig.4 is a plan view of rotary shelves of the same system;
Fig.5 is an enlarged front view of a sprocket wheel;
Fig.6 is a front view partly in section of a unit for giving tension onto a chain:
Fig.7 is a front view showing the relation between a tray and a rail;

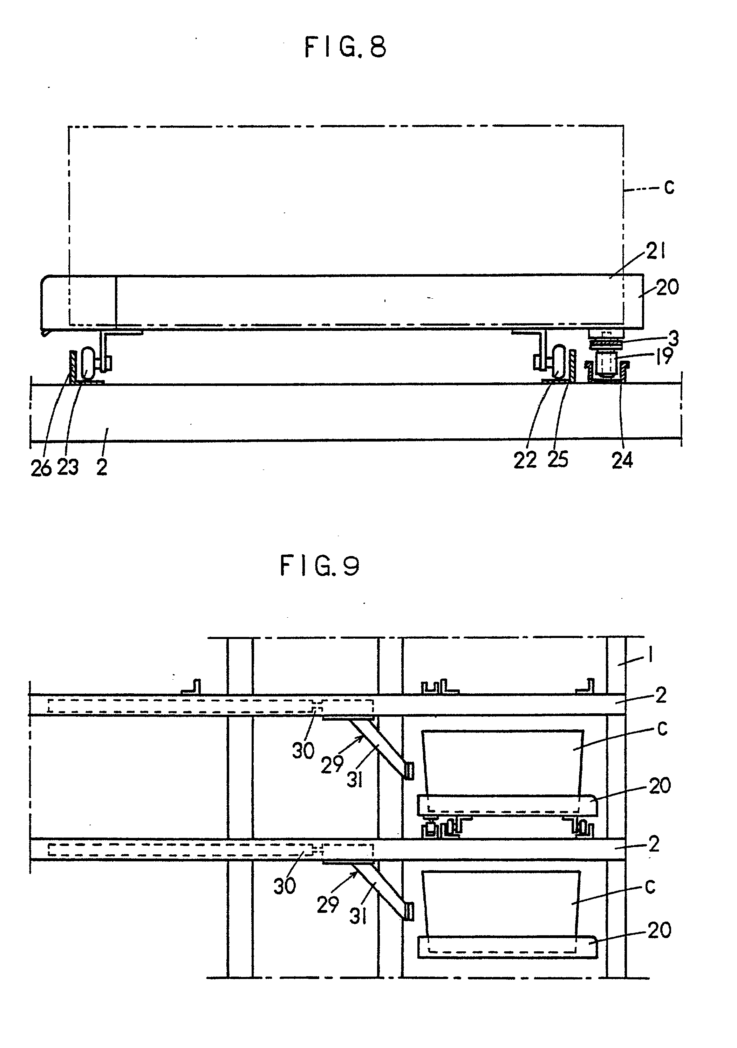

Fig.8 is a longitudinal view in section showing the relation between the tray and the rail;

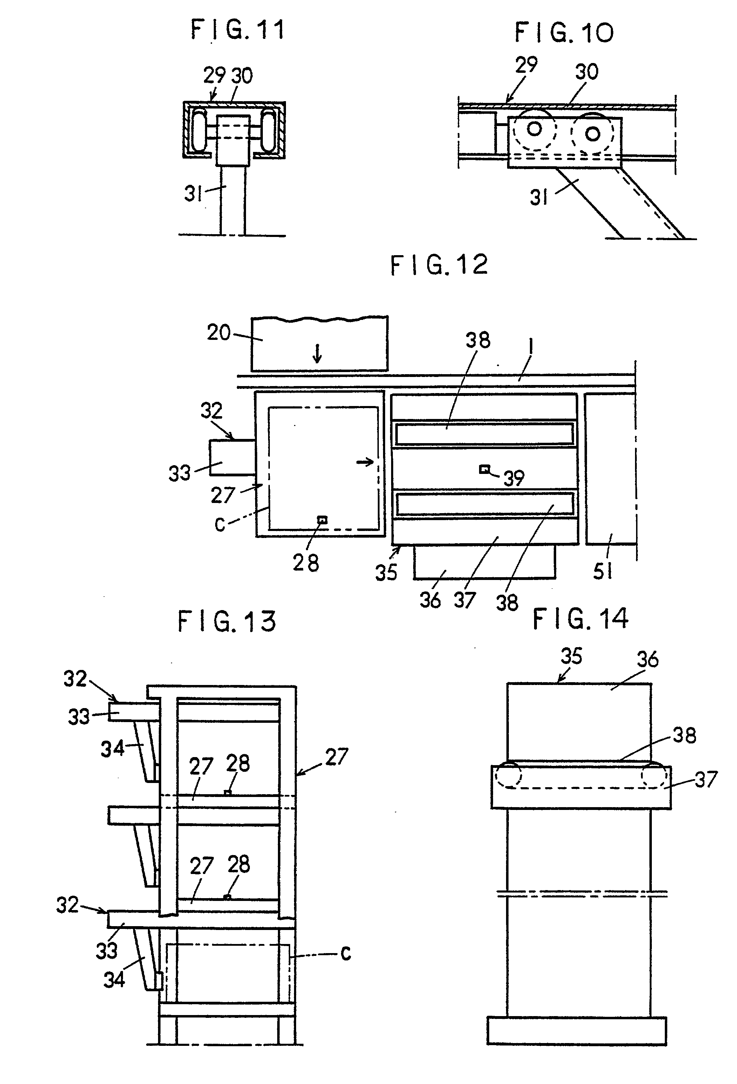

Fig.9 is a front view showing the relation between a pushing-out unit and the tray;
Figs.10 and 11 are partly enlarged cross-sections of the pushing-out units, respectively;
Fig.12 is a plan view showing the arrangement of a carry-out stand and a carry-out unit;
Fig.13 is a front view of the carry-out stand;
Fig.14 is a front view of the carry-out unit;
Fig.15 is a perspective view of parts in the vicinity of a take-out port;
Fig.16 is a plan view of another embodiment of the carry-out unit in the take-out port;
Fig.17 is a perspective view of the carry-out unit in the take-out port;
Fig.18 is a front view of the carry-out unit in the take-out port;
Fig.19 is a side view of the carry-out unit in the take-out port;

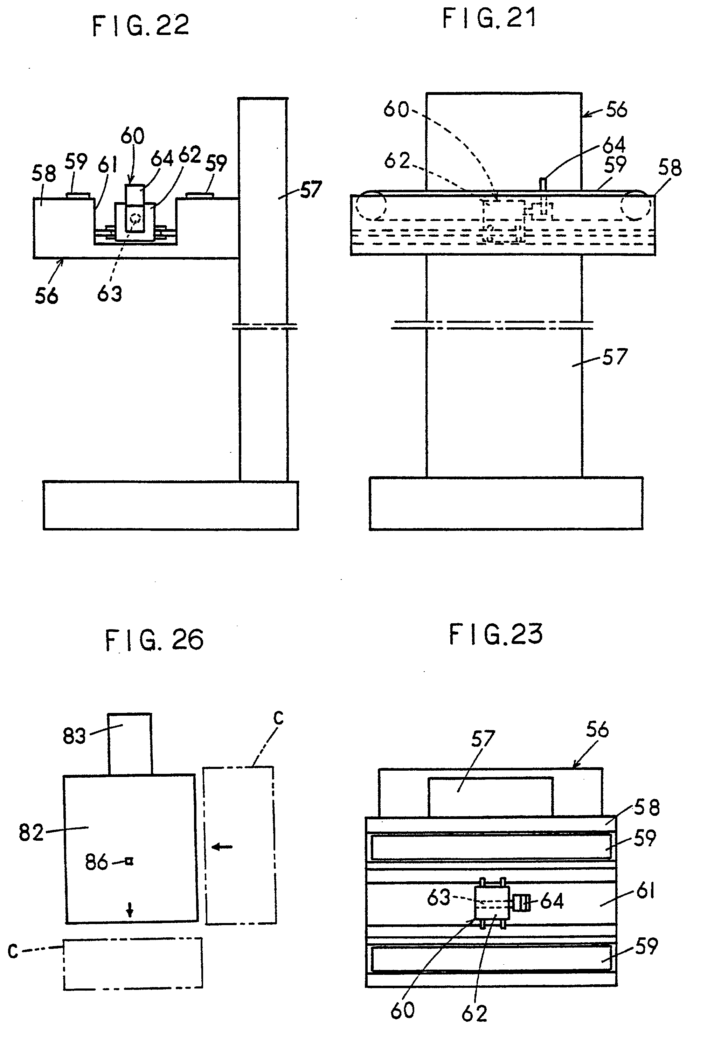

Fig.20 is a perspective view of parts in the vicinity of an incoming port;
Fig.21 is a front view of the carry-out unit;
Fig.22 is a side view of the carry-out unit;
Fig.23 is a plan view of the carry-out unit;
Fig.24 is a front view partly in section of another carry-out unit;
Fig.25 is a side view partly in section of the other carry-out unit;
Fig.26 is a plan view of the carry-out stand;
Fig. 27 is a front view of the carry-out stand;
Fig. 28 is a perspective view of another embodiment of the pushing-out unit of the carry-out stand:
Fig.29 is a block diagram of a control unit in taking-out;

Fig.30 is a block diagram of the control unit in taking-in;

Fig.31 is a plan view showing the relation between an actuator and a sensor in the tray;

Fig.32 is a block diagram of the control unit;

Fig.33 is a block diagram of another control unit;

Fig.34 is a block diagram of still another control unit:

Fig.35 is a plan view showing the status of arrangement of the container;

Fig. 36 is a graph of time vs speed in the rotation of the container;

Fig.37 is a block diagram of the control unit to determine the order for the rotation of the tray:

Fig.38 is a perspective view of the container having its inside divided;

Fig.39 is a block diagram of important parts of the control circuit:

Figs. 40 and 41 views to help explaining the display in a display unit:

Fig. 42 is a block diagram of a control unit for identifying error containers: and

Fig. 43 is a perspective view of the container.

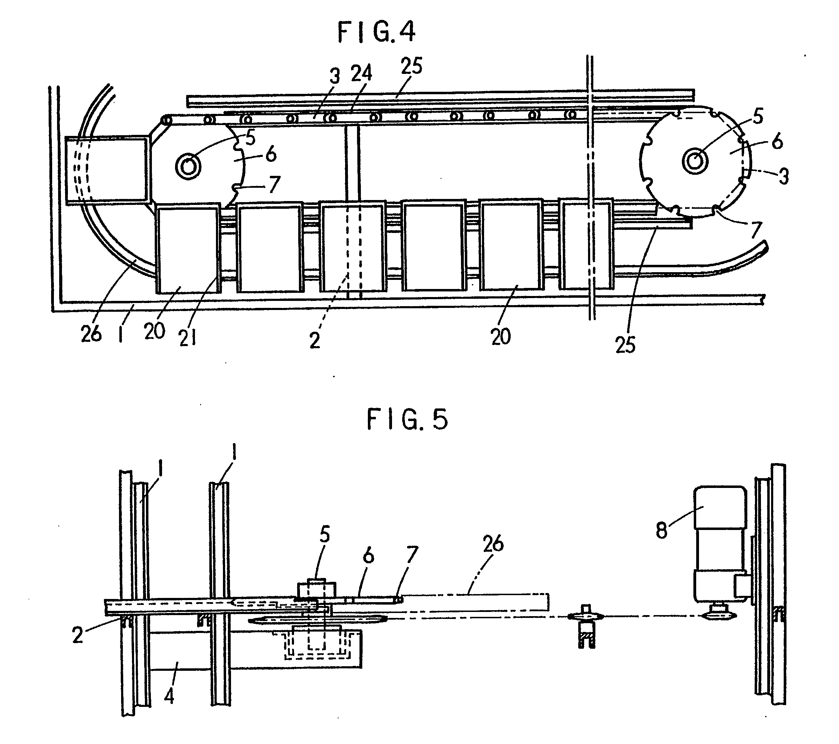

Referring to the drawings, embodiments of the present invention will be described in detail hereunder. In the drawings, the reference numeral 1 designates a frame constituted by a plurality of rod-like elements longitudinally and transversely combined with each other. The inside of the frame 1 is divided into a plurality of steps by crosspieces 2. A pair of support arms 4 which have end portions fixed to the frame 1 at the center side of the lengthwise direction of an endless chain 3 as shown in Figs. 4 and 5, are made from a part of the crosspieces 2 or other materials to thereby function as support arms provided to the side ends of the crosspieces 2. A pair of shafts 5 are vertically mounted onto each of the support arms 4.

The reference numeral 6 designates a pair of sprocket wheels fixed to the respective shafts 5. The endless chain 3 is set up so as to be forcedly driven through indents 7 of the pair of sprocket wheels 6 and 6 by an electric motor 8.

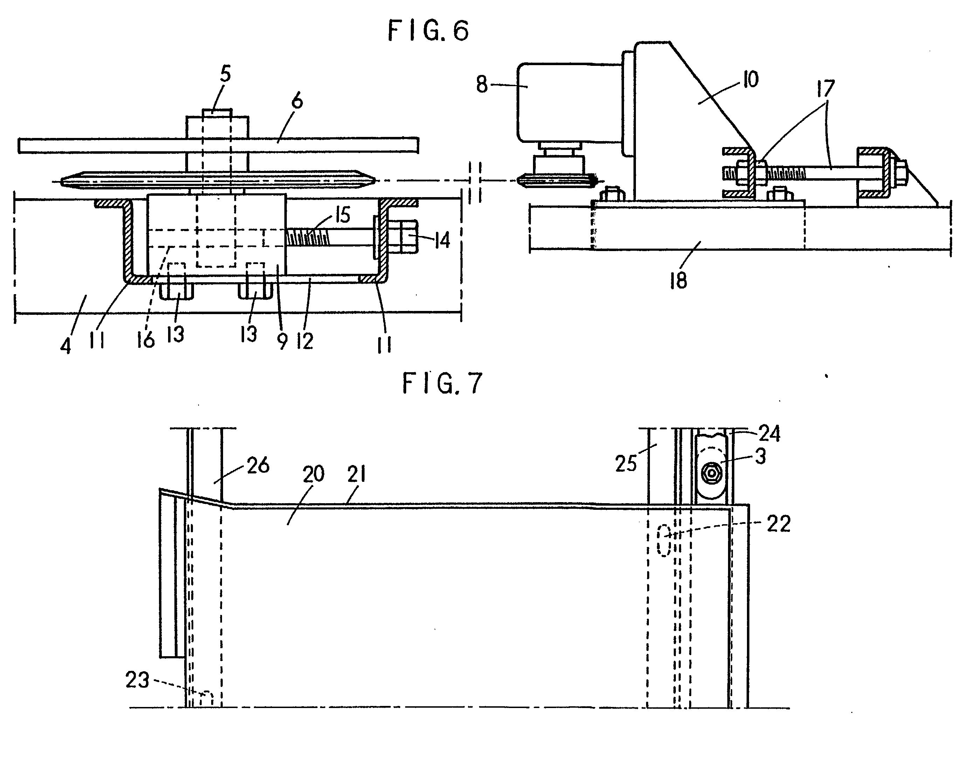

In Fig. 6, the support arm 4 is provided with a housing 11 which opens upward to make a shaft bearing 9 of the sprocket wheel 6 movable in the lengthwise direction of the chain 3 as well as to make a mount 10 for mounting the motor 8 movable in the direction of movement of the shaft 5. The bearing 9 is disposed in the housing 11 and fixed in an elongated hole 12 by bolts 13 movably in the lengthwise direction of the frame 1. A single or a plurality of displacing bolts 14 having screw portions 15 at the top thereof respectively, are inserted through the housing 11. The screw portions 15 are screwed into corresponding screw holes 16. On the other hand, the mount 10 for the motor 8 is made movable on a support bed 18 in connection with bolt and nut means 17.

In the drawings, the reference numeral 19 designates rollers mounted onto one end of a shaft connecting a link of the chain 3. The chain 3 is mounted onto the sprocket wheels 6, the rollers 19 being engaged with the indents 7 and the links being mounted onto the sprocket wheels 6, respectively. The reference numeral 20 designates trays which have one end mounted and stuck onto the chain 3. The trays 20 project outward from the chain 3 for the purpose of mounting containers disposed at the whole length thereof. Each tray is provided with upright walls 21 formed at its sides on the chain 3 side and at its sides continued to the first mentioned sides. The reference numerals 22 and 23 designate wheels which are mounted onto the opposite ends of the respective tray 20 at its lower surface and at the outer periphery of the chain 3, that is, mounted onto the one end of the tray near the chain 3 and onto the other end of the same apart from the chain 3, respectively. The axes of the wheels 22 and 23 perpendicularly intersect the direction of movement of the chain 3. The reference numeral 24 designates a guiderail U-shaped in section and fixed onto the respective crosspiece 2 for guiding the chain 3. The guiderail 24 is provided below the straight-line portion of the chain 3 to extend over the whole length of the same, and the roller 19 is inserted into the guiderail 24. The reference numeral 25 designates an inside rail mounted onto the crosspiece 2 at the outside of the guiderail 24 and substantially in parallel with the guiderail. The wheel 22 is mounted onto the inside rail 25 and the wheel 23 is mounted onto an endless outside rail 26 stuck onto the crosspiece 2 at the outside of the inside rail 25, whereby the respective tray 20 may turn together with the chain 3 while being kept at a horizontal condition.

The reference numeral 27 designates a carry-out stand disposed to the side of a port for picking up a container C corresponding to the stop position of the tray 20. The carry-out stand 27 is disposed at a height possible of carrying out a container C mounted to the respective tray corresponding to the step thereof. Limit switches 28 for producing a signal upon contact with the container C are provided on the upper surfaces of the carry-out stands 27, respectively. The reference numeral 29 designates a unit for pushing out the container C, the unit 29 being disposed on the upper side of the respective tray 20 in opposition to the carry-out stand 27. The pushing-out unit 29 is arranged to move a pushing-out body 31 by driving means such as an air cylinder, a chain or the like. the pushing-out body 31 is arranged to push an upper portion of the tray 20 to move the latter along a support rail 30 which is fixed onto the frame 1 perpendicularly to the advancing direction of the chain 3. The container C on the tray 20 is therefore pushed by the pushing-out body 31 so as to be carried out onto the carry-out stand 27 existing in front of the container.

The reference numeral 32 designates a pushing-out unit disposed on the upper side of the respective carry-out stand 27. The pushing-out unit 32 is arranged in the same manner as the above-described pushing-out unit 29. The container C on the carry-out stand 27 is pushed by a pushing-out body 34 which is forcedly moved along a support rail 33 arranged in parallel to the advancing direction of the chain 3, so that the container C is shifted onto a carry-out unit 35 disposed on the the side portion of the container C. The reference numeral 36 designates a pole of the carry-out unit 35 provided with a station 37 which is arranged to be movable up and down and capable of stopping at a position corresponding to the height of the respective carry-out stand 27. The up/down movement of the station 37 may be performed by any means such as a chain, a combination of rack and pinion, or the like. The reference numeral 38 designates a transfer unit having a belt conveyor disposed horizontally on the upper side of the station 37. The transfer unit 38 is movable in parallel to the advancing direction of the chain 3. The container C on the carry-out stand 27 is shifted to the transfer unit 38. The reference numeral 39 designates a limit switch provided on the upper surface of the station 37. The existence of the container C on the station 37 is detected by the limit switch 39. A chain, a roller, or the like, may be used as a transfer unit 38.

Although the above-mentioned embodiment according to the present invention has shown as to the case where the carry-out stand 27 having shelves corresponding in number to the steps of rotary shelves and the carry-out unit 35 having the up/down movable station 37 are provided as means for taking out the container C between a taking-out port of the rotary shelves and a conveyor end described below, the present invention is applicable to the case where a single carry-out unit 35' instead of these two units.

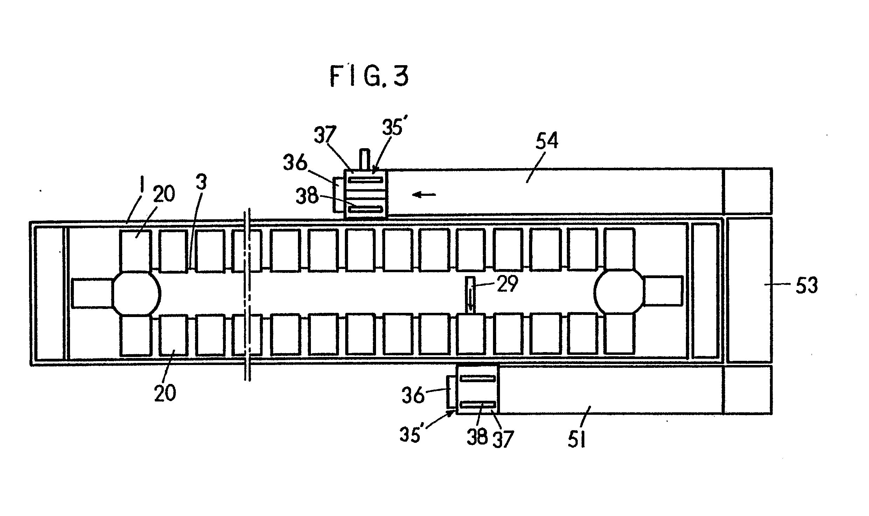

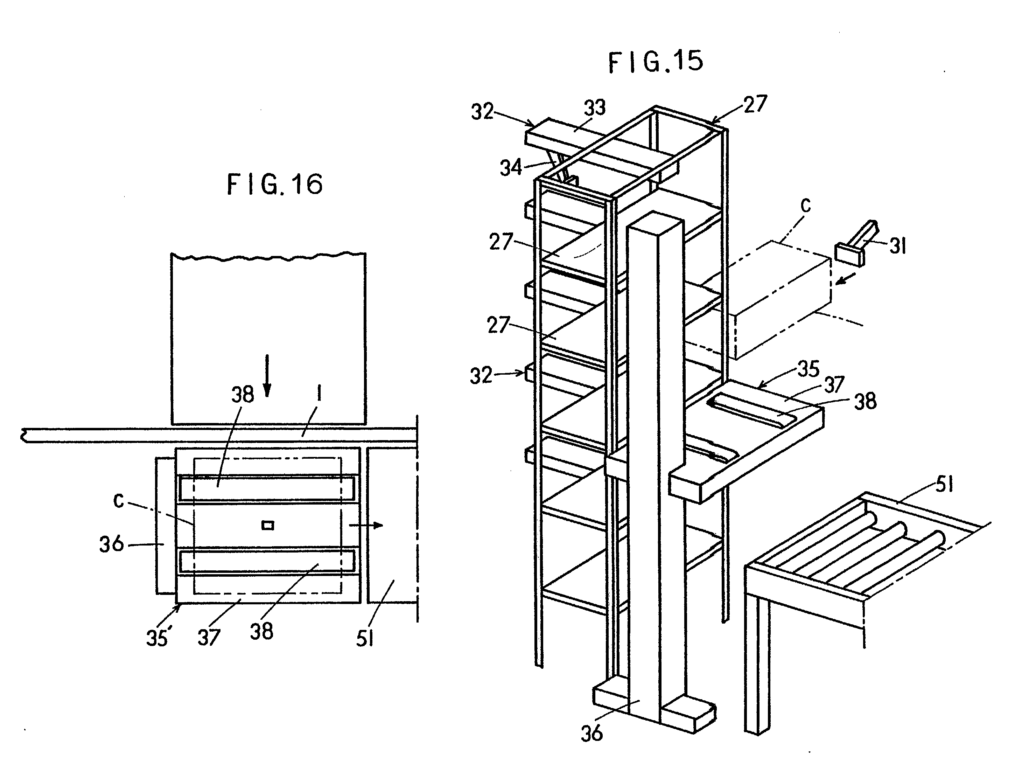

Fig.3 is a plan view of another system according to the present invention having such a carry-out unit 35', and Figs.16, 17, 18-19 show the carry-out unit 35' serving also as a carry-out stand.

The carry-out unit 35' of Fig.16 has a station 37 up/down movably provided on the side of a pole 36. Transfer units 38 for transferring a container C, such as a belt conveyor or the like, are provided on the upper opposite sides of the station 37. The station 37 moves to the front face of a given shelf of rotary shelves so that the container C pushed out by a pushing-out unit 29 is mounted onto the station 37, and then the station 37 is lowered to the height of the belt conveyor in the next step so that the container C on the station is moved by being driven by the belt conveyor.

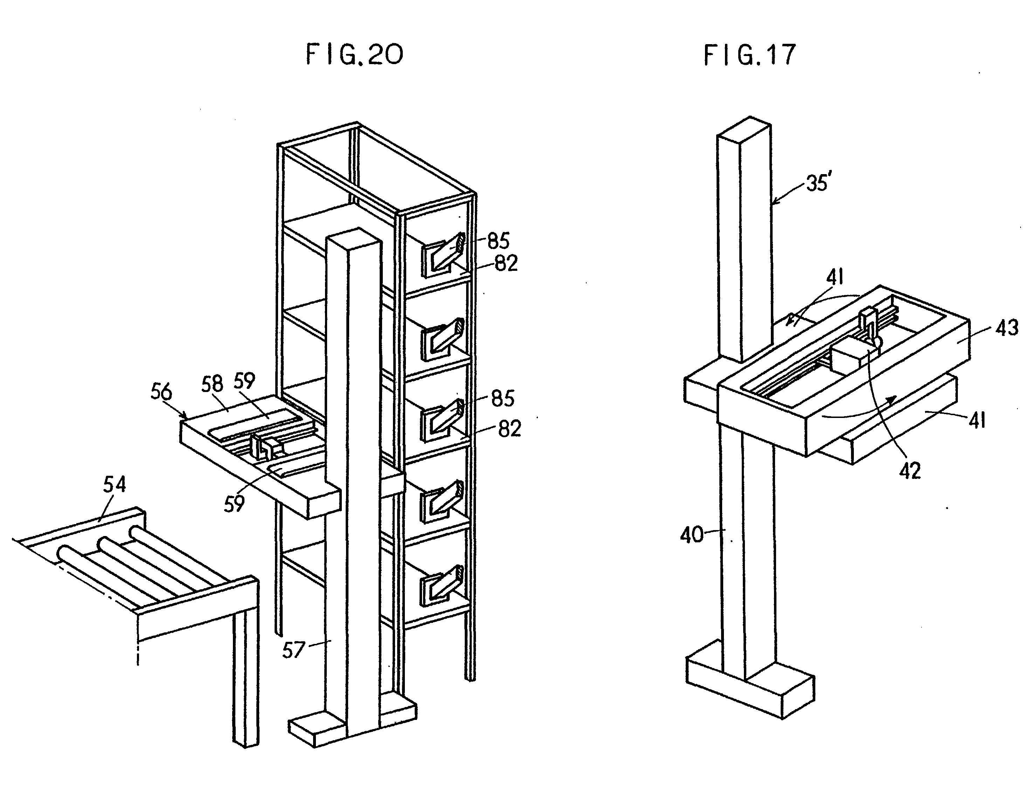

In the carry-out unit 35' of Fig.17, a table 43 provided with a pushing-out unit 42 is mounted on the upper surface of a station 41 provided up/down movably relative to a pole 40. The pushing-out unit 42 can turn at least between a taking-out port and a conveyor as well as can send out the container C mounted.

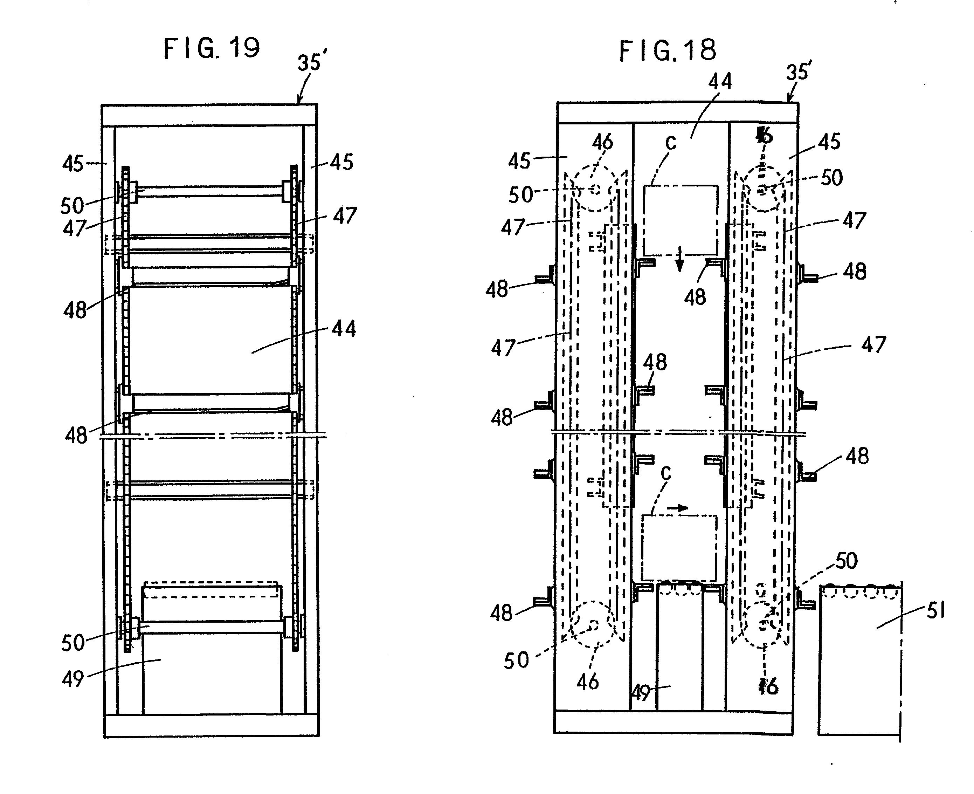

The carry-out unit 35' of Figs.18 and 19 has a pair of frame bodies 45 provided in the front upper and lower portions of the taking-out port of the rotary shelves at a distance 44 capable of receiving the container C, a pair of endless chains 47 set up around upper and lower sprocket wheels 46 provided on the respective frame bodies 45, and half-shelves 48 provided at the same interval as the vertical distance of the respective feed chain 3 for the purpose of supporting the container C on the chains 47. The reference numeral 49 designates a conveyor, and 50 shafts for the sprocket wheels 46. The container C is sent from the rotary shelf to the half-shelf 48 so as to be mounted on the conveyor 49 at the lower limit of the distance, and then passed through the frame body onto a take-out conveyor 51.

It is a matter of course that the above-mentioned carry-out units 35' can be used in front of the taking-out port, and further, it is obvious that these units can be used in front of the taking-in port also at the time of storing a container C.

The take-out conveyor 51 employs such as rollers, belts, or the like, disposed outside the frame 1 at the opposite side of a carry-out stand 27. The take-out conveyor 51 moves along the advancing direction of the transfer unit 38, and the container C on the station 37 is transferred onto the conveyor 51 by the transfer unit 38. The take-out conveyor 51 has a length reaching the end of the frame 1. The reference numeral 52 designates a stopper provided on the take-out conveyor 51 at an upper portion of the end thereof in the advancing direction thereof. The stopper 52 serves to stop the container C on the take-out conveyor 51 when the take-out conveyor 51 is continuously operated. The stopper 52 may be arranged to be movable so as to be located above the take-out conveyor 51 at a necessary time, or may be immovably fixed. Any means such as a roller, a belt, or the like, can be used in the take-out conveyor 51, and particularly in the case of using a roller, the driving can be performed desiredly. Accordingly, for example, in the case where the container C on the take-out conveyor 51 is shifted by the transfer unit 38 of the station 37 and the stopper 52 is not required, the stopper 52 can be omitted. When movably provided, the stopper 52 can be driven by any motive source such as an air cylinder or the like.

The reference numeral 53 designates a stand for handling the container C, provided along the end side of the frame 1 on the side of the take-out conveyor 51 at its end in the advancing direction thereof. The container C having been sent by the take-out conveyor 51 is automatically or manually shifted onto the handling stand 53, and goods such as parts or the like contained in the container C are taken out of the container C or goods are put into in the container C. The handling stand 53 may have rollers on its surface or any member such as a table or the like.

The reference numeral 54 designates a take-in conveyor disposed outside the frame 1 at the opposite side to the take-out conveyor 51 and arranged to advance in the direction opposite to the take-out conveyor 51. One end of the take-in conveyor 54 is made to be in opposition to the handling stand 53 so that the container C having been dealt on the handling stand 53 is automatically or manually shifted onto the take-in conveyor 54. The reference numeral 55 designates stoppers disposed on the take-in conveyor 54 at the upper side of the end thereof in the advancing direction of the same. The stoppers 55 are provided at two positions at a distance corresponding to the width of the container C, and are moved alternately up and down or left and right. Accordingly, it is made possible to send the containers C to the next step one by one. If the take-in conveyor 54 is intermittently driven, the stoppers 55 become unnecessary.

The reference numeral 56 designates a carry-out unit disposed on the side of the take-in conveyor 54 at its end in the advancing direction thereof. The carry-out unit 56 is arranged substantially in the same manner of the carry-out unit 35. That is, the carry-out unit 56 has a station 58 which is up/down movably mounted on a pole 57 and is capable of stopping at a position corresponding to the height of the respective tray 20. A transfer unit 59 comprising a conveyor advancing in the same direction as the take-in conveyor 54, is provided on the upper surface of the station 58. The reference numeral 60 designates a pushing-out unit provided on the upper surface of the station 58 and having a movable body 62 which is provided on the bottom of a U-shaped groove 61 formed in the upper surface of the station 58 and extended in the same direction as the advancing direction of the transfer unit 59. the movable body 62 is arranged to be forcedly movable in the lengthwise direction of the groove 61 by a motor or the like. The movable body 62 is provided with a rod 63 disposed in parallel to the moving direction of the movable body 62. A latch 64 projecting from the upper surface of the station 58 is stuck onto the end of the rod 63. The rod 63 is arranged to be forcedly turned by about 90 degrees by a motor, a solenoid, or the like, to thereby rise up the latch 64 so as to cause the latch to engage with the container C existing above the latch 64. The rod 63 normally makes the latch horizontal so as not to be an obstacle to the mounting operations of the container C. The arrangement of the pushing-out unit 60 is not limited to the specific embodiment, and, for example, an endless conveyor provided with a latch projected therefrom may be used as a pushing-out unit.

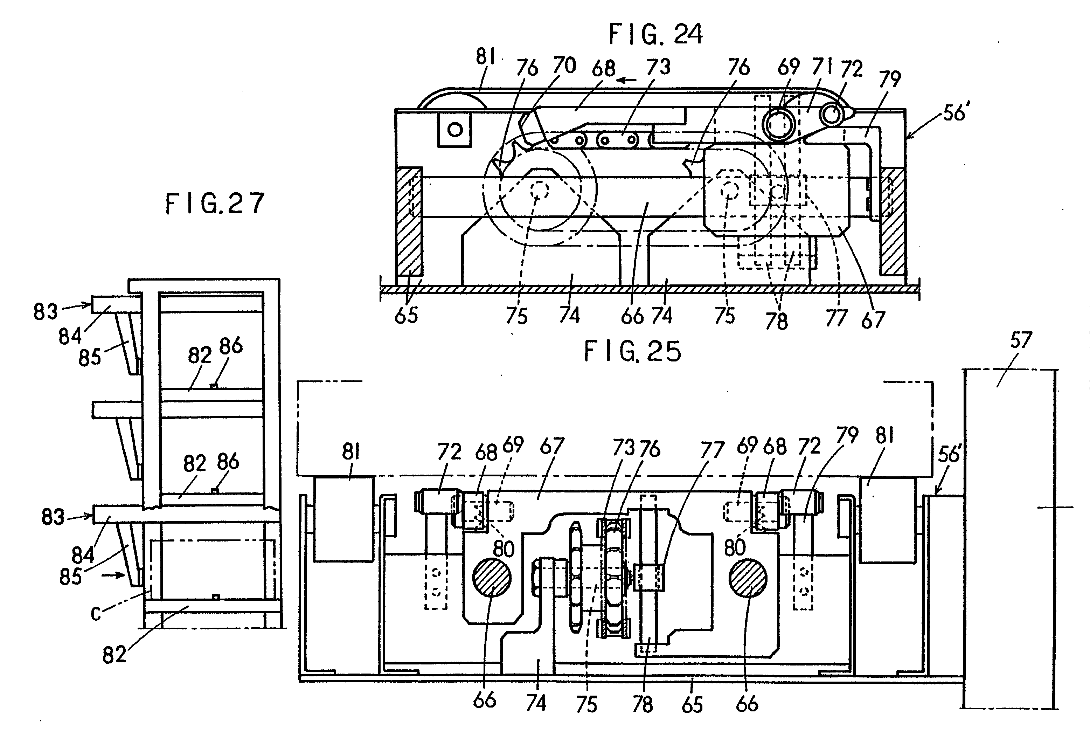

Figs.24 and 25 show a modification 56' of the carry-out unit 56. The carry-out unit 56' may be employed not only on the taking-in port side but on the taking-out port side.

That is, in the drawings, the reference numeral 65 designates a box-like housing which constitutes a table. A pair of guide rods 66 are horizontally and mutually parallelly suspended and fixed between mutually opposite upright walls of the housing 65. The reference numeral 67 designates a reversely U-shaped support suspended between and slidably attached on the guide rods 66. The reference numeral 68 designates a pushing-out arm partly mounted onto the support 67. One end of the respective pushing-out arm 68 in the axial direction of the corresponding guide rod 66 is vertically swingably mounted on the support 67 by a horizontal shaft 69. The other end of the pushing-out arm 68 far away from the shaft 69 forms a pushing-out portion 70 for pushing-out the container C. The reference numeral 71 designates a pad which projects from the shaft 69 of the pushing-out arm 68 in the direction opposite to the pushing-out portion 70. The pad 71 has an inclined lower surface to thereby enable the pushing-out arm 68 to swing upward. However, the inclined surface of the pad 71 is not necessary if a proper distance is provided between the lower surface of the pushing-out arm 68 and the upper surface of the support 67. The reference numeral 72 designates a pin which projects from the side surface of the pad 71. Although the drawing shows the case where a roller is mounted onto the pin 72, the roller may be omitted.

The reference numeral 73 designates an endless chain which turns in the same direction as the axis of the guide rod 66. The chain 73 is mounted, through sprocket wheels 76, to shafts 75 mounted in the form of a cantilever to a pair of shaft bearings 74 stuck onto the bottom of the housing 65. The reference numeral 77 designates a connection which is pivoted to the side of the chain 73 on the opposite side to the shaft bearing 74. The connection 77 is slidably mounted onto a support rod 78 stuck onto the support 67 with its axis made vertical. The support rod 78 has a length larger than the distance between a forward path and a backward path of the chain 73. Accordingly, as the chain 73 turns, the pushing-out arm 68 is moved through the support rod 78 and support 67. Since the connection 77 is slidable relative to the support rod 78, the support 67 and the pushing-out arm 68 can be reciprocated only by the movement of the connection 77 from the forward path to the back path of the chain 73 without stopping the chain 73.

The reference numeral 79 designates a prop which is disposed at a position in opposition to the pin 72 of the pushing-out arm 68 in the axial direction of the guide rod 66, and is stuck onto the housing 65. The upper surface of the prop 79 is made inclined such that the end thereof facing the pushing-out arm 68 is made lowered. The prop 79 is provided at a height to make the pushing-out arm 68 about horizontal in the case where the pin 72 of the pushing-out arm 68 having moved back is mounted onto the upper surface of the prop. The reference numeral 80 designates a spring interposed between the pushing-out arm 68 and the support 67 closer to the pushing-out portion 70 than the shaft 69. The pushing-out arm 68 is given upward spring force by the spring 80. The spring 80 can be provided at any position as long as it can give the pushing-out arm 68 such upward spring force. The reference numeral 81 designates a transfer unit mounted on the housing 65 at the opposite sides of the pushing-out arm 68 in the diametrical direction of the guide rod 66. The transfer unit 81 is provided so as to project upward more than the pushing-out arm 68 when the pushing-out arm 68 is made about horizontal, and the unit 81 is constituted by a belt or roller conveyor which is arranged to be forcedly driven. The table constituted by the housing 65 is mounted on the pole 57 such that the table is movable vertically and capable of stopping at a predetermined position.

The above-mentioned carry-out unit 56' is set up in place of the carry-out unit 56 so as to be used for transferring the container C from the take-in conveyor 54 to a carry-out stand at the next stage.

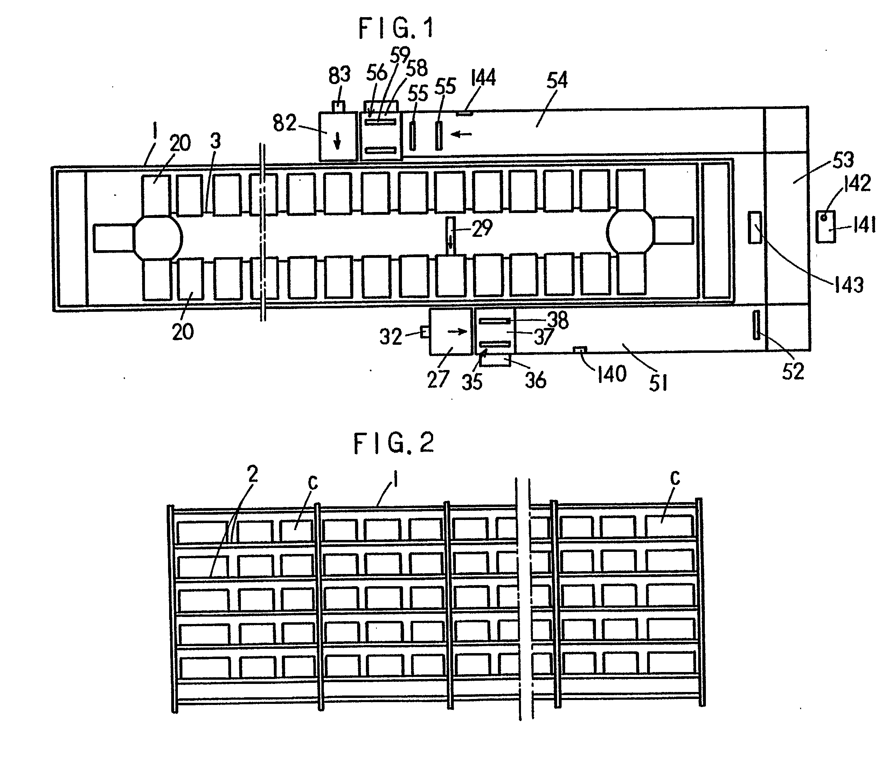

The reference numeral 82 in Figs.26 and 27 designates a carry-out stand disposed on the side of the taking-in port shown in Fig.1. The carry-out stand 82 is provided on the side of the carry-out unit 56 in the advancing direction of the transfer unit 59. The carry-out stand 82 is formed corresponding to the respective step tray 20, and provided at its upper portion with a pushing-out unit 83 for pushing the container C mounted on the stand 82 onto the tray 20 existing in the front of the container C. Similarly to the pushing-out unit 32, the pushing-out unit 83 is provided with a pushing-out body 85 arranged to be moved along a support rail 84 by an air cylinder, a chain, or the like. The reference numeral 86 designates a limit switch which is provided on the carry-out stand 82.

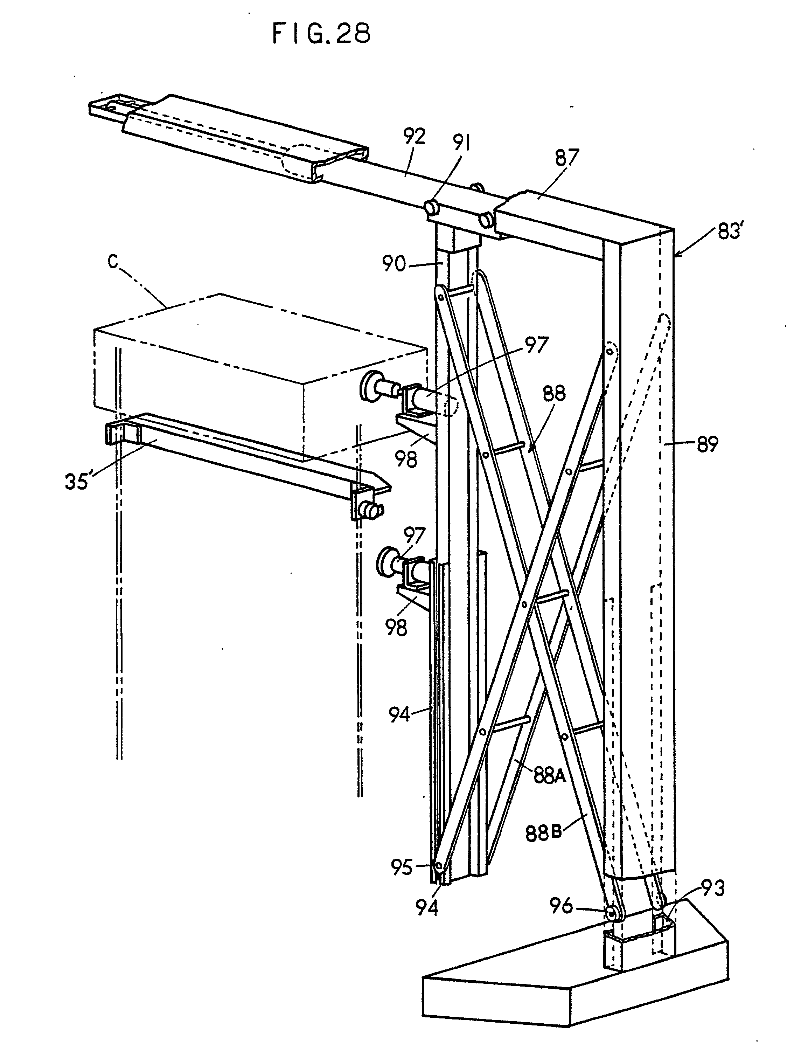

Fig.28 shows another embodiment of the pushing-out unit used for shifting the container C from the carry-out stand to the tray. The pushing-out unit in this embodiment is designated by the reference numeral 83′ in the drawing and constituted by a support rail 87 horizontally provided on the side of the carry-out stand designated by the reference numeral 82 or as illustrated in the drwaing on the side of the carry-out unit 35′ shown in Figs.18-19, a pair of link bars 88 disposed in the X-shaped state, and a pole 89.

A plate-like movable body 90 which has a length about as long as the pole 89 is mounted on the support rail 87 so as to be hung therefrom. The movable body 90 is arranged to be forcedly moved along the support rail 87. The reference numeral 91 designates a roller mounted on the upper end of the movable body and inserted into the support rail 87. The reference numeral 92 designates an air cylinder which is mounted on the upper end of the movable body 90 for the purpose of moving the movable body 90 and which has a rod mounted on the end of the support rail 87.

The pair of link bars 88 arranged X-shaped are connected with each other by a shaft at its lengthwise intermediate portion. One and the other link bars 88A and 88B are pivoted on the pole 89 and on the movable body 90 respectively at their respective upper ends. The reference numerals 93 and 94 respectively designate roller guides each having a C-shaped cross-section and respectively vertically mounted onto the respective lower portions of the pole 89 and the movable body 90. Support rollers 95 and 96 mounted respectively on the respective lower ends of the link bars 88A and 88B are movably inserted into the roller guides 93 and 94 respectively. Accordingly, in the case where the movable body 90 is shifted toward the transfer unit 35′, the link bars 88A and 88B become vertically separated far away from each other to thereby push the vertical hung movable body 90 toward the frame 1. Reversely, in the case where the movable body 90 is shifted backward, the link bars 88A and 88B come vertically near to each other to thereby separate the movable body 90 from the frame 1.

The reference numeral 97 designates a pushing-out air cylinder mounted on the movable body 90 on the side opposite to the link bars 88, with the axis thereof being set horizontally. The air cylinder 97 is provided corresponding to the tray 20 of the respective step and disposed at a height so as to be capable of contacting with the side surface of the container mounted on the corresponding tray 20. The reference numeral 98 designates a mount provided for mounting the air cylinder 97 and stuck on the movable body 90. The air cylinder 97 is mounted on the mount 98 through an elongated hole formed to extend in the axial direction of the air cylinder 97 to thereby enable the mounting position of the air cylinder 97 to be adjusted.

Although the above described embodiment illustrates the case where the storing operation of the container C at the side of the taking-in port is performed by the carry-out unit 56 and the carry-out stand 82, these units 56 and 82 may be replaced by the single carry-out unit 35′ shown in Figs.16 through 19 which serves as a carry-out unit as well as a carry-out stand similarly to the case on the side of the taking-out port for the container C as described above.

The operations of taking-in and taking-out of a container C in the goods-storing system according to the present invention which is illustrated in Fig.3 and which has such a carry-out unit as shown in Figs.16 through 19 are performed in the following manner. When a container C is designated to be taken out, the chain 3 on the corresponding step on which the designated container C is present is turned so that the tray 20 having the container C stops in the front of the taking-out port. Upon the stopping of the chain 3, the station 37 or 41 of the carry-out unit 35′ or the half shelf 48 is moved to a surface position of the taking-out port corresponding the step, and the pushing-out unit 29 corresponding to the step is actuated to push the container C onto the upper surface the station or the half shelf. Then, the station 37 or 41 or the half shelf 48 moves up to the height of the take-out conveyor 51 so that the transfer unit 38 provided on the station 37 or 41 or the carry-out unit transfers the container C to the conveyor 51. The container C is sent to a position suitable for the work to be performed by the conveyor 51, for example, to the handling stand 53. After handling, the container C is transferred to the taking-in port of the rotary shelves and then stored into the corresponding tray 20 of the rotary shelves by the same unit as the carry-out unit 35′ at the taking-out port. The detail from taking-out to taking-in of this unit is described as to the goods-storing system which is illustrated in Figs.1 and 2 and which has the carry-out stand 27 and the carry-out unit 35.

The goods-storing system having a carry-out stand 27 and a carry-out unit 35 as shown in Figs.1 and 2 operates as follows.

The taking-out and taking-in of a container C is performed such that when a container to be taken out is designated, the chain 3 having the designated container C is turned so that the tray 20 having the container C is stopped in the front of the carry-out stand 27. Upon stopping of the chain 3, the pushing-out unit 29 corresponding to this step is actuated so that the corresponding pushing-out body 31 pushes the container C onto the carry-out stand 27 from the tray 20. The container C thus mounted onto the carry-out stand 27 is shifted by the pushing-out unit 32 onto the station 37 of the carry-out unit 35 having stopped in the front of the pushing-out unit 32. The station 37 with the container mounted thereon moves up to the height of the take-out conveyor 51 so that the transfer unit 38 provided on the station 37 shifts the container C onto the take-out conveyor 51 which conveys the container C to the end of the conveyor 51. The container C thus reached the end of the take-out conveyor 51 is in turn transferred onto the handling stand 53, and goods contained in the container C are taken out of the container C or goods are stored into the container C. Alternatively, the container C may be transferred to any other place than the handling stand 53.

After handling, the container C is transferred to the take-in conveyor 54 from the handling stand 53 so as to send the container C to the station 58 of the carry-out unit 56. The station 58 with the container C mounted thereon is moved to the corresponding tray 20 to store the container C on the tray 20, and then the container C is transferred onto the carry-out stand 82 by the transfer unit 59 of the station 58. It is repeated to perform the operation that the container C mounted on the carry-out stand 82 is pushed into the corresponding tray 20 having stopped in the front of the carry-out stand 82 by the pushing-out unit 83 of the carry-out stand 82.

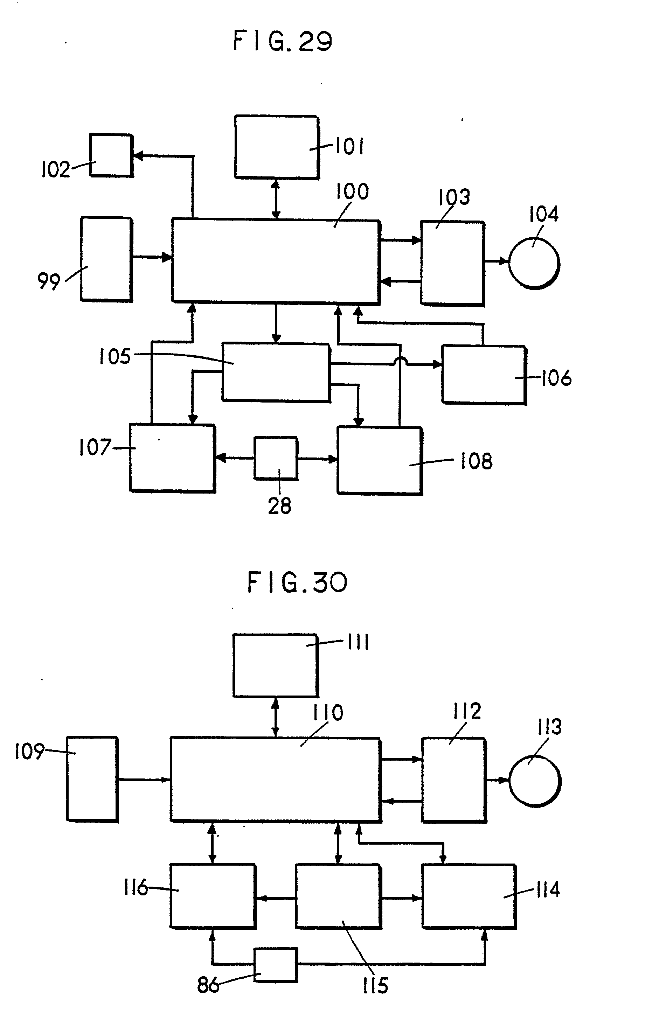

Fig.29 is a block diagram of a control unit for controlling the container taking-out operation, and referring to Fig.29 the control operation will now be described hereunder. When a container C is designated to be taken out, a code relating to the designation including information such a step number of the tray 20, a position number of the tray 20, and so on, is entered into a control circuit 100 from a control panel 99. The control circuit 100 into which the code has been entered obtains the address and data of the designated container C from a memory circuit 101 on the basis of the entered code, and at the same time, writes the fact that the container C has been designated into the memory circuit 101. If the designated container C is one which had been already designated and had been taken out, this fact is indicated on a display unit 102.

In the case where a designated container C exists on the tray 20, the control circuit 100 produces a signal to a drive circuit 103 of the chain 3 so that a motor 104 corresponding to a predetermined step is started to make the container C stop at a position in opposition to the carry-out stand 27. On the other hand, the control circuit 100 applies a step signal into a step signal converter 105 so that the converter 105 temporarily stores the step signal.

A set signal corresponding to the first entered one of all of the step signals temporarily stored in the converter 105 is entered into both of drive circuits 106 and 107 for the carry-out unit 35 and the pushing-out unit 29 respectively. Accordingly, the drive circuit 106 drives a motor of the carry-out unit 35 to thereby move the station 37 thereof to a height corresponding to the designated container C. Upon reception of the above-mentioned set signal, the drive circuit 107 for the pushing-out unit 29 ascertains the fact that a completion signal indicating the completion of the movement of the chain 3 has been supplied from the drive circuit 103 for the chain 3 through both of the control circuit 100 and step signal converter 105 and that the limit switch 28 of the carry-out stand 27 has been turned off so that no container C exists on the carry-out stand 27. After the confirmation, the drive circuit 107 drives the pushing-out unit 29 to push the container C onto the carry-out stand 27 from the tray 20. Then, the drive circuit 107 applies a completion signal to the control circuit 100 so that the step signal temporarily stored in the step signal converter 105, for example, the first entered step signal, is applied to a drive circuit 108 for the pushing-out unit 32 provided on the carry-out stand 27. Upon reception of the step signal, the drive circuit 108 ascertains that fact that a completion signal indicating the completion of the movement of the station 37 has been applied from the drive circuit 106 of the carry out unit 35 through both of the control circuit 100 and step signal converter 105 and that the limit switch 28 has been turned on and a container C exists on the carry-out stand 27. After the confirmation, the drive circuit 108 drives the corresponding pushing-out unit 32 to shift the container C onto the station 37 which is stopping in the front of the pushing-out unit 32. Upon completion of the transfer of the container C onto the station 37, the control circuit 100 produces a signal to the drive circuit 106 on the basis of the completion signal applied from the drive circuit 108 to thereby shift the station 37 up to the height of the take-out conveyor 51. Upon stopping of the station 37, the transfer unit 38 of the station 37 operates to shift the container C onto the take-out conveyor 51, so that the container C is sent to the handling stand 53.

Fig.30 is a block diagram showing a control unit for controlling the container taking-in operation. The control operation will be now described hereunder. A reader 109 reads out data indicated on the container C to be taken-in and enters the read-out data into a control circuit 110. The control circuit 110 obtains the address of the container C from a memory circuit 111 on the basis of the data and transmits the address into a drive circuit 112 of the chain 3, so that the drive circuit 112 drives a motor 113 corresponding to the necessary step to thereby make the corresponding tray 20 stop in the front of the carry-out stand 82. On the other hand, the control circuit 110 transmits a signal to a drive circuit 114 of the carry-out unit 56 to thereby shift the station 58 of the carry-out unit 56 up to the height of the take-in conveyor 54. After completing the shifting of the station 58, the container C sent by the take-in conveyor 54 is mounted onto the station 58 by the transfer unit 59.

In addition, the control circuit 110 transmits a step signal obtained from the memory circuit 111 to a step signal converter 115. The converter 115 temporarily stores the step signal and transmits a decoded set signal to the drive circuit 114 as well as a drive circuit 116 for the pushing-out unit 83 of the carry-out stand 82.

Accordingly, the drive circuit 114 shifts the station 58 up to the height of the carry-out stand 82 on the basis of a completion signal indicating the presence of the container C on the station 58. After reception of the completion signal and confirmation of the fact that the limit switch 86 of the carry-out stand 82 has been turned off and that no container C exists on the carry-out stand 82, the drive circuit 114 actuates the pushing-out unit 60 of the station 58 to push the container C is pushed onto the carry-out stand 82 from the station 58. Upon completion of this operation, the control circuit 110 applies a signal to the drive circuit 116 in response to a completion signal from the drive circuit 114. Upon reception of this signal from the control circuit 110, the set signal from the converter 115 and the completion signal from the drive circuit 112, and after ascertaining the fact that the limit switching 86 of the carry-out stand 82 has been turned on and a container C exists on the carry-out stand 82, the drive circuit 116 actuates the pushing-out unit 83 to make the the container C come back to the tray 20 from the carry-out stand 82.

Although the respective control units for taking-in and taking-out the container C have been shown in Figs.29 and 30 separately for description, it is of course possible to provide a single control unit to serve as a control unit for the taking-in operation and as a control unit for the taking-out operation. In addition, the carry-out stands 27 and 82 may be provided on the same side of the frame 1.

As described above, those units are arranged so as to be piled up in a plurality of steps, and the respective tray 20 having a container C mounted thereon is turned by a corresponding one of the chains which are arranged to be individually driven independently of each other. Accordingly, in the case where any containers C are designated to be taken out, the containers C of the respective steps can be moved to the taking-out port successively. The thus moved containers C are shifted to the corresponding carry-out stands 27 disposed in the front thereof, respectively. Then, the respective container C is shifted to the take-out conveyor 51 from the carry-out stand 27 by the station 37 of the carry-out unit 35, and taken out to the handling stand 53. Accordingly, the rotary shelves respectively having the chains 3 arranged in a plurality of steps enable the designated containers C mounted on the corresponding trays 20 to be moved to the taking-out port successively, by transferring the containers C onto the carry-out stands 27. Accordingly, it is possible to substantially obviate the time loss for waiting till a container C on the corresponding tray 20 has been taken out. Accordingly, it is possible to use the rotary shelves efficiently. Similarly to this, also in the case where containers C are to be mounted onto the respective trays 20, the carry-out unit 56 enables the next container C to be lifted to a necessary height, only by mounting a container C on the carry-out stands 82. Accordingly, it is possible to substantially obviate the time loss for waiting till a tray 20 stops in the front of the station 58 of the carry-out unit 56. Accordingly, it is possible to use the carry-out unit 56 for taking-in operations efficiently. In addition, the taking-out port and the taking-in port are provided separately from each other, and connected to each other through the take-out conveyor 51, handling stand 53, and take-in conveyor 54, so that it is possible to perform the taking-in and taking-out operations of the containers C wastelessly and efficiently.

Although the goods-storing system according to the present invention is arranged as described above, it would be appreciated that the system may be provided with other various embodiments in the following points.

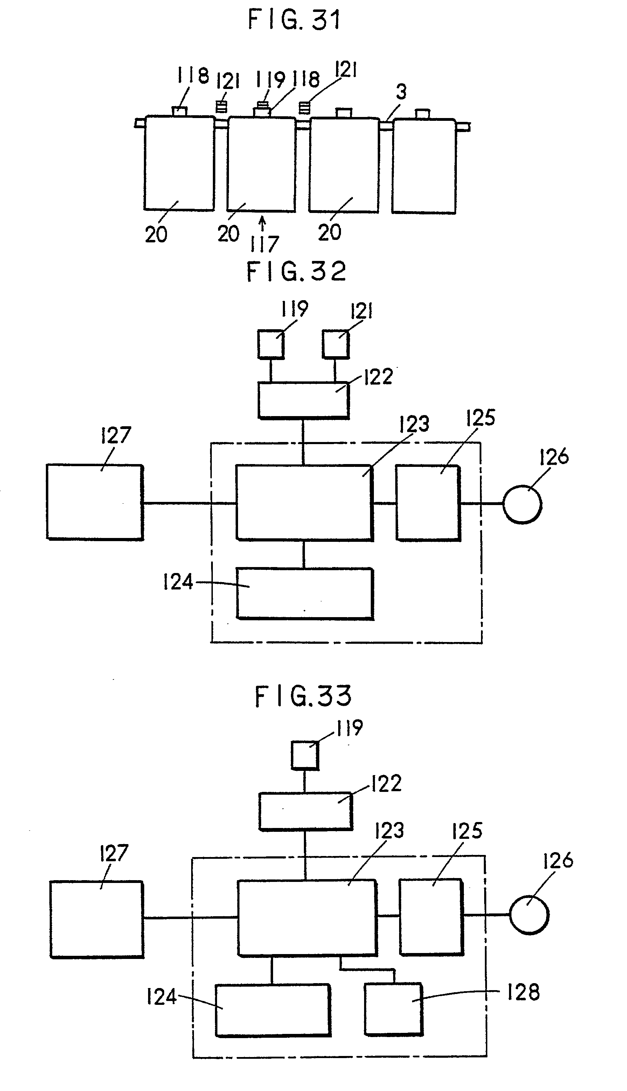

(1) Although the control for taking-in and taking-out operations of containers C is performed as described above, it is necessary to decelerate the trays in the vicinity of the taking-out port or taking-in port when the containers C mounted on the trays of the respective rotary shelves are moved to the taking-out port or taking-in port by the chains successively. The goods-storing system provided with means for decelerating trays is shown in Figs.31 through 36.

In the drawings, the reference numeral 117 designates a delivery position in the respective rotary shelf, for stopping a designated container C so as to take out goods out of the container C or store goods into the same. A position sensor 119 is stuck on the frame 1 corresponding to the delivery position 117, so that the position sensor 119 produces a position signal for indicating the position of the tray 20 when an actuator 118 of the tray 20 passes through, comes close to, or comes in contact with the delivery position. The reference numeral 120 designates change-over positions which are provided at the both sides of a taking-in position and at which the turning speed of the respective chain 3 is changed over from a high speed to a low one. The reference numeral 121 designates deceleration signal generating sensors which are stuck on the frame 1 and each of which is disposed between the position sensor 119 and the change-over position 120 such that the actuator 118 can pass by, come close to, or come into contact with the respective sensor.

Fig.32 is a block diagram of a control unit in this storing system, in which the output signals of the sensors 119 and 121 are applies to a position detection circuit 122. The position of the respective tray 20 detected by counting the output signal of the sensor 119 is entered as data into a control circuit 123. The thus entered data are stored in a memory circuit 124 successively. On the other hand, in the case where a container C existing in a place other than the place between the change-over positions or its adjacent places is designated, the corresponding chain 3 turns so that the designated container C reaches the change-over position 120. Upon detection of the arrival of the designated container at the change-over position, the control circuit 123 applies a signal for changing-over the speed of a motor 126 into a low value to a drive circuit 125. In the case where a container C existing in the place between the change-over positions 120 or its adjacent places is designated and the sensor 121 generates a deceleration signal, the control circuit 123 applies a signal for decelerating the motor 126 for driving the shaft 5 to the drive circuit 125. Upon arrival of the designated container C at the delivery position 117 and upon detection of the arrival, the control circuit 123 applies a stop signal to the drive circuit 125 to make the motor 126 stop. The reference numeral 127 designates an input/output circuit. Data as to a designated container C or the like are entered into the control circuit 123 through the input/output circuit 127.

As the sensors 119 and 121, any means can be used as long as it generates a signal when the actuator passes through, comes close to, or comes into contact with the means. For example, the means may be a photosensor, a Hall element, a contactless switch, a reed switch, a limit switch, or the like.

In this system, in the case where a container C is designated, the data thereof are entered into the control circuit 123 from the input/output circuit 127. The control circuit 123 judges a nearer way to the delivery position 117 from the designated container C on the basis of all the data stored therein, and as the result, applies a drive signal to the drive circuit 125 to thereby turn the corresponding chain 3 in the judged direction. When the designated container C reaches the change-over position 120, the circuit 123 detects the arrival of the container C and applies a signal to the drive circuit 125 so that the turning speed of the chain 3 is changed over to a low value. When the container C reaches the delivery position, the control circuit 123 produces a stop signal so as to cause the chain 3 to stop. Such an operation as described above is repeated.

In the case that the designated container C exists between the change-over positions 120 or in the vicinity thereof, the chain 3 is started to turn, and upon detection of the arrival of the actuator 118 at the sensor 121 when the latter passes by the sensor 121, the sensor 121 produces a deceleration signal so that the control circuit 123 controls the chain 3 to decelerate in response to the deceleration signal from the sensor 121. Then, when the container C reaches the delivery position, the control circuit 123 causes the chain 3 to stop.

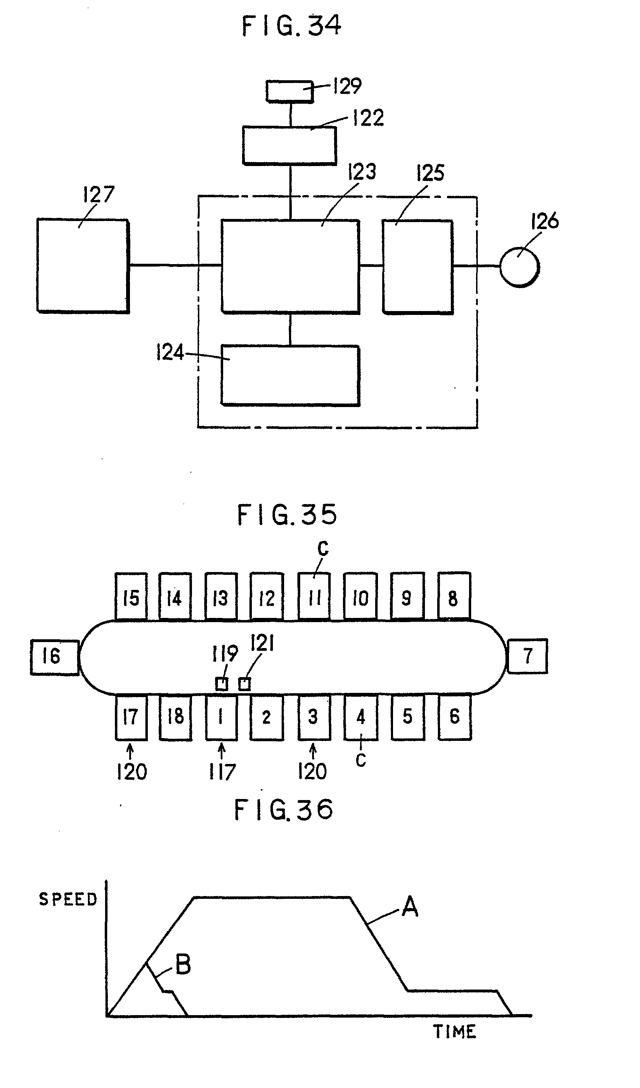

This operation will be described more in detail in reference to Fig.35. To make the description easy, the numbers labeled on the respective containers in the drawing used in the following description. For example, if a container No.7 is designated, the control circuit 123 judges that the amount of movement to the delivery position in right turn is equivalent to six containers' width and the amount of movement to the same in left turn is equivalent to twelve containers' width. On the basis of this judgement, the control circuit 123 supplies a signal instructing right turn to the drive circuit 125. As the result, the chain 3 is turned right, and then the position sensors 119 detect the position of the container No.7 successively to thereby produce output signals whenever the container passes them. When the arrival of the container No.7 at the change-over position 120 is detected, the turning speed of the chain 3 is made low by an instruction signal from the control circuit 123. When the container reaches the delivery position 117, the control circuit 123 produces a stop signal to thereby stop the container No.7 at the delivery position 117. The distribution of the turning speed in this case is shown in Fig.36A.

Next, in the case where a container No.2 being stopping between the change-over positions 120 is designated, the control circuit 123 judges the turn direction of the chain 3 so that the chain 3 is made to turn right. The starting speed of the chain 3 in this case is the same as shown in Fig.36A. When the deceleration signal generating sensor 121 detects the arrival of the actuator of the container No.2, the control circuit 123 applies a signal to the drive circuit 125 on the basis of an output signal of the sensor 121 so that the turning speed of the chain 3 is made low. When the container No.2 reaches the delivery position, the control circuit 123 produces a stop signal. The turning speed distribution in this case is shown in Fig.36B. The speed at a deceleration position in this case is higher than that at a low speed time in the speed distribution A. In short, since the designated container C between the change-over positions 120 is temporarily turned at a speed higher than the low speed in the distribution A, it is possible to shorten the time to be taken for the movement to the delivery position 117.

If a container No.18 is designated, the chain 3 is turned left in the same manner as described above. When the deceleration signal generating sensor 121 produces a signal upon detection of passage of the actuator 118 of the container No.18, the turning speed of the chain 3 is reduced and then the chain 3 is caused to stop. This operation is applied to the respective cases where containers of Nos. 3, 17, 4 and 16 are designated.

As described above, according to this system, the chain 3 can be operated at a constant speed regardless of the position where a container C is stopping. Further, in the case where a container C being stopping between the speed change-over positions 120 or in the vicinity thereof is designated, the chain 3 can be turned at a speed as high as possible. Thereafter, the speed of the chain 3 can be reduced by the output signal of the deceleration signal generating sensor 121 so that the chain 3 can stop then at the delivery position. Accordingly, even in the case where a container C being stopping in the vicinity of the delivery position 117 is designated, it is possible to shorten access time for the container C as well as it is possible to stop the container C substantially at a predetermined position, that is, at the delivery position 117.

The number of the deceleration signal generating sensor 121 is not limited to one. For example, as shown in Fig.31, two sensors 121 may be provided on the opposite sides of the delivery position 117. However, in the case where only one sensor 121 is provided, it is desired that the sensor 121 is disposed between containers C when the containers are stopping, since the moving distance of the chain 3 in right turn from the turning start point to the point where a deceleration signal is produced must be made equal to that of the chain 3 in left turn. When two sensors are provided as shown in Fig.31, each of the positions thereof is freely set.

As the sensors 121 are provided to detect the moving distance of the chain 3 when a container C existing between the speed change-over positions 120 or in the vicinity thereof is designated, it is unnecessary that each of the respective positions of the sensors 121 is limited to a position between the change-over positions 120. That is, the sensors 121 can be disposed at any place on the circle formed by the chain 3. For example, the sensors 121 can be disposed at positions between the containers of Nos. 8 and 9 in Fig.35. As the position sensors 119 are provided to detect a container C reaching thereto, it is unnecessary that each of positions of the sensors 119 is limited to the delivery position 117. That is, the sensors 121 can be disposed at any positions on a circle formed by the chain 3.

Fig.33 shows another embodiment in which the deceleration signal generating sensor 121 is replaced by a timer 128 to be used as deceleration signal generating means. In this embodiment, when a container C being stopping between the change-over positions 120 or in the vicinity thereof is designated, the timer 128 applies a deceleration signal to the control circuit 123 with a suitable lapse of time after the start of turning of the chain 3.

Fig.34 shows another embodiment in which an encoder 129 detects the number of revolution of the motor 126 in the form of a moving distance of the chain 3 to thereby produce a deceleration signal. The encoder 129 produces a deceleration signal when the chain 3 has moved by a predetermined distance. In this embodiment, the output position of the signal can be desiredly selected, and accordingly, higher accurate control is feasible. In addition, in this embodiment the position sensors 119 can be omitted.

(2) If a plurality of containers C are designated to be successively taken out of the taking-out port of the rotary shelves, some containers having reached to the taking-out position must wait till some containers having been designated earlier are dealt. Accordingly, when a lot of containers C are designated, a long time is taken for handling.

To solve this problem, the system in this embodiment comprises: detecting means for detecting the tray at every step of the chain, for example, an actuator downward L-shaped being provided on the inner surface of the tray; position sensors for detecting the passage, approaching, or touching of the top end of the detecting means to thereby produce a position signal for reporting the position of the tray; movement amount detecting means for detecting a distance to the taking-out position from the respective designated container C at every step on the basis of the signal of the position detecting means; and a control unit having means for comprising the respective amounts of movement of the designated containers C with each other and for producing signals corresponding the steps of the designated containers indicating the order in which the designated containers C will successively reach the taking-out port; and means for moving the station, the table, the half shelf of the carry-out unit at the step on the basis of each of the signals.

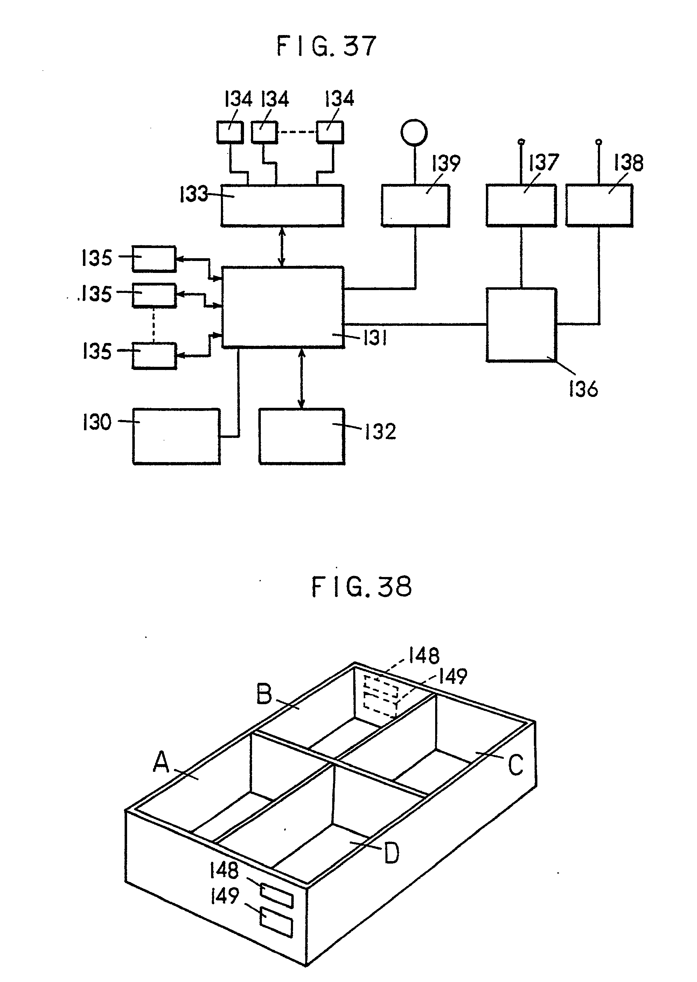

Fig. 37 is a block diagram of the control unit of this storing system, in which data of the code of a designated container C and data of the step number of the chain 3 having the container C are entered into a main control circuit 131 through an input/output circuit 130. The reference numeral 132 designates a storage unit for storing data with reference to the present position of the respective tray, step number, and present state of the respective container C at every step produced from the main control circuit 131 to thereby send some necessary data to the main control circuit 131 through addressing of the main control circuit 131. The reference numeral 133 designates a position detection circuit. The position signal for reporting the present position of the tray 20, which is produced by a position sensor 134 disposed corresponding to the respective actuator at every step when the tray 20 passes by or stopped at the position of the sensor, is applied to the position detection circuit 133, the output of the position detection circuit 133 being in turn applied to the main control circuit 131. The reference numeral 135 designates a movement amount detecting circuit for detecting the moving distance of the respective tray designated at every step on the basis of the signal applied from the main control circuit 131 corresponding to the the position signal. The thus detected data signals are applied into the main control circuit 131. Having received the signals from the movement amount detecting circuit 135, the main control circuit 131 ascertains the present positions of all the designated trays by subtracting the moving distances of the respective designated and turning trays on the basis of the received signal and the data stored in the memory unit 132, compares the respective moving distances of all the respective trays 20 of the designated steps, and applies signals to a carry-out unit control circuit 136 successively in the order of the steps the designated trays 20 of which will successively reach the delivery position in that order. The reference numeral 137 designates a drive circuit for driving the carry-out unit, which causes the station to stop at a height of the designated step in accordance with the instruction from the control circuit 136. The reference numeral 138 designates a station position detecting circuit. A position signal is applied to the station position detecting circuit 138 from a sensor (not shown) provided on the pole or the like for detecting the stop position of the station of the carry-out unit, and then the data signal is supplied to the control circuit 136.

On the other hand, the main control circuit 131 produces a stop signal to a motor drive circuit 139 for driving the motor of the designated chain whenever the corresponding designated tray 20 reaches the delivery position. The above-mentioned purpose of this embodiment is thus attained.

(3) If the inside of the container C is partitioned, when a container C is taken out of its rotary shelf, both the position of the container and the position of the partitioned inside thereof are requested. In this case, it is necessary to correctly indicate a designated partitioned portion in the container C regardless of the orientation of the container C to be taken out of the shelf. Therefore, as shown in Fig.38, in the case where the inside of a container C is partitioned into a plurality portions, indications for identifying directions, for example, such as code marks, forward backward identification labels, are respectively provided at positions opposite to each other. In addition, there are provided a detecting unit for detecting the indications and a display unit for displaying the position of the inside portion of the container C on the basis of the signal of the detecting unit.

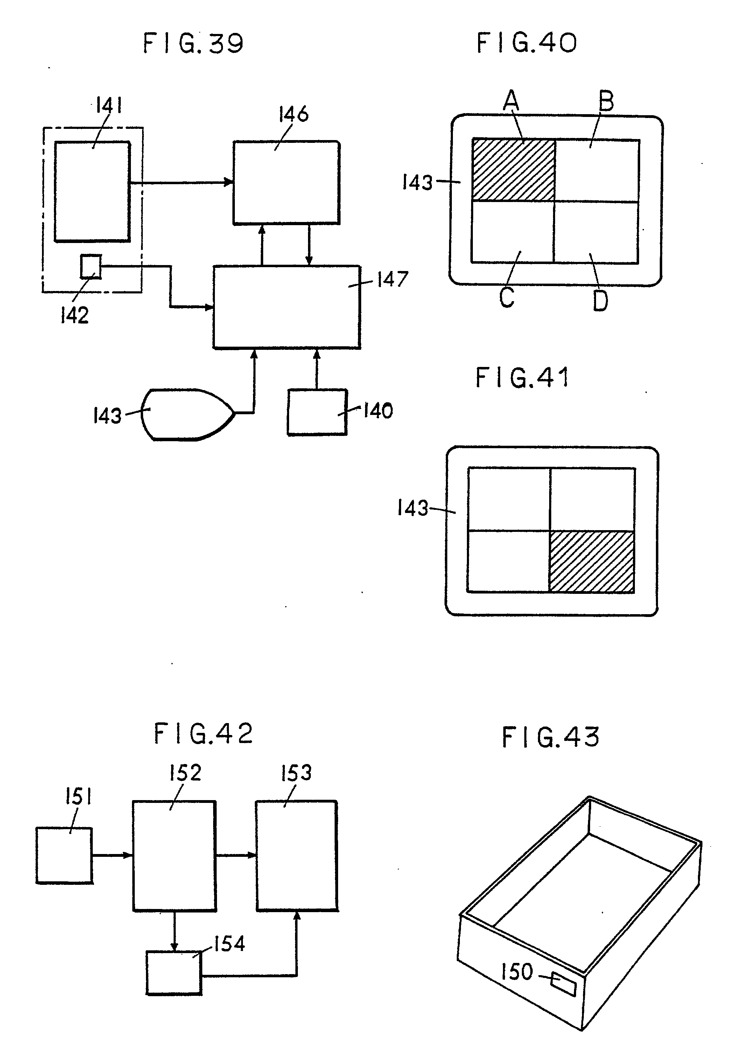

That is, the reference numeral 140 in Fig. 39 designates a forward-backward detecting unit (see Fig.1) provided on the upper side of the take-out conveyor 51. The detecting unit 140 detects color or code identifying the front side or back side of the container C. The reference numeral 141 designates an input unit disposed on the side of the handling stand 53. Some necessary data requested with respect to the container C are applied to the input unit 141. The reference numeral 142 designates an instruction key for giving the display unit an instruction to effect display. When the key 142 is operated, the display unit 143, such as a cathode ray tube, displays the requested portion of the container C. The reference numeral 144 designates a code mark reader provided on the upper side of the take-in conveyor 54.

Fig.39 is a block diagram of important parts of the control unit, in which a memory circuit 146 stores the data of the container C applied from the input unit 141 and produces the data to a display control circuit 147 successively. Also the data identifying the front side or back side of the container C and being detected by the forward-backward detecting unit 140, is supplied to the display control circuit 147. The display control circuit 147 causes the display unit 143 to display the position of the requested partitioned portion of the container C on the on the basis of both of the above-mentioned data and the data supplied from the memory circuit 146.

The operation of this system in taking-in and taking-out the containers C will be described hereunder.

When a container C is designated to be taken out, necessary data, that is, the code mark of the container C, the position of the partitioned portion thereof, the step and row of the shelf unit, and the like, are entered into the input unit 141. Then, when the chain 3 at the designated step turns and the designated container C stops, the pushing-out unit 29 at that step pushes out the container C frontward to mount it onto the carry-out stand 27. On the other hand, the station 37 of the carry-out unit 35 moves up/down and then stops at the side of the carry-out stand 27, so that the container C is moved onto the station 37 by the pushing-out unit 32. The station 37 with the container C mounted thereon moves down to the front of the take-out conveyor 51 and the container C is transferred onto the take-out conveyor 51 by the transfer unit 38. Next, the transfer conveyor 51 conveys the container C to the handing stand 53. On the handling stand 53, goods are taken out of the designated partitioned portion of the container C, or the container C is transferred to another place to be handled thereat.

Having been dealt on the handling stand 53, the container C is transferred to the carry-out unit 56 by the take-in conveyor 54 and then mounted onto the station 58. The station 58 with the container C mounted thereon moves up to an instructed height and stops thereat, and then the container C is transferred onto the carry out stand 82 by the transfer unit 59. On the other hand, the tray 20 for storing the container C stops in the front of the carry out stand 82 and the pushing out unit 83 pushes the container C so that the container C is transferred onto the tray 20 from the carry-out stand 82. This operation is repeated. The order to store the containers is determined by reading a code mark 148 on each container C by means of the code mark reader 144, and then on the basis of this order, the control unit controls the chain 3 and the carry-out unit 56.

In this system, if a container C taken out from its rotary shelf is returned as it is onto its tray 20 from the carry-out stand 82, the orientation of the container C is reversed in front and back directions. That is, the orientation of the container C stored in the rotary shelf is not fixed. However, in this system, the forward-backward detecting unit 140 detects the forward-backward identification label 149 provided on the side-wall outer surface of each container C during the moving of the take-out conveyor 51 with the containers C mounted thereon and enter the data as to the orientations of the respective containers C into the display control circuit 147 successively. Accordingly, the display control circuit 147 can causes the display unit 143 to timely display data with respect to the orientation of the container C at any time as long as the instruction key 142 is operated, for example, when the container C is mounted onto the handling stand 53. For example, in the case where a partitioned portion A of a container C is requested and the signal of the forward-backward detecting unit 140 indicates "forward", the control circuit 147 causes the display unit 143 to display the fact that the partitioned portion A is requested with the container C maintained as it is, as shown in Fig.40. In the case where the container C is orientated "backward", the display control circuit 147 causes the display unit 143 to display the fact that the partitioned portion reversed in up/down and left/right directions is requested, as shown in Fig.41. As described above, according to this embodiment, the forward-backward detecting unit 140 detects the forward backward identification label 149, such as a different color, a code mark, or the like, provided on the mutually opposite side-wall outer surfaces of the respective container C, so that the position of the requested partitioned portion of the container C is displayed on the display unit 143 on the basis of the detected data. Accordingly, the requested partitioned portion of the container C always can be accurately displayed on the display unit regardless of the orientation of the container C to be taken out. Accordingly, it is possible to prevent such a mistake that goods are taken out of an erroneous partitioned portion. In addition, troublesome procedures, such as confirmation of the orientation of the container C to be taken out or returned to the tray 20, are become unnecessary. Accordingly, handling of containers C can be performed efficiently and simply. The forwardbackward detecting unit 140 can be provided in any positions, for example, on the handling stand 53.

The position of the forward-backward identification label 149 is not limited to the side-wall outer surface of the container C. The label 149 can be provided at any positions, for example, at the side-wall upper surface, opposite end portions of the bottom of the container C, as long as it can indicate the orientation of the container C. The indication for identifying "forward" or "backward" is not limited to the label, and any indicating means, for example printing on the container, may be used.

The number of the partitioned portions of a container C can be desiredly selected.

(4) Finally, sometimes, when a container C is stored in its rotary shelf, it becomes necessary to judge whether the container C to be stored is a correct one or not. In this occasion, a code mark may be provided on the container C. Whether the container C is correct one or not can be judged by reading the code mark.

Fig. 43 shows an embodiment of such a container C having such a code mark. In the block diagram of Fig.42, the reference numeral 150 designates a code mark provided on the side-wall outer surface of a container C, and 151 a code reader for reading the code mark 150, the code reader 151 being provided on the take-in conveyor 54 at the upper end portion in the advancing direction thereof. The data read by the code reader 151 are supplied to a data judging circuit 152. The judging circuit 152 has the data as to all the containers C stored in the respective rotary shelves and compares the data with the data supplied from the reader 151. The reference numeral 153 designates a drive control circuit for the carry-out unit 56 which makes the container C return to the associated rotary shelf. The drive control circuit 153 causes the station 58 to move in response to an output signal of the data judging circuit 152 and causes the transfer unit 59 to transfer the container C mounted on the station 58 onto the carry-out stand 82. The reference numeral 154 designates a memory unit for storing error step signals memory unit which operates as a signal generating circuit into which an output signal of the data judging circuit 152 when it is proved that the data read by the code reader 151 is an erroneous one as the result of comparison between the data stored in the data data judging circuit 152 and the data applied by the code reader 151. The memory unit 154 stores therein the data as to the steps and applies a signal to the control circuit 153 upon reception of the data from the judging circuit 152. Upon reception of the signal from the memory unit 154, the control circuit 153 causes the station 58 to stop at a position of a reception unit comprising a. conveyor (not shown) disposed above the take-in conveyor 54 and then causes the transfer unit 59 to transfer the container C to the reception unit.

The operation of this system in taking-in and taking-out the containers C will be described hereunder.

When a container C is designated to be taken out, necessary data, such as, the code mark of the container C, the step and row of the rotary shelf unit, and the like, are supplied to the control unit which in turn causes the designated container C to be moved to the taking-out port and then stop thereat. The pushing-out unit 29 at the associated step pushes the container C frontward onto the carry-out stand 27. On the other hand, the station 37 of the carry-out unit 35 moves up/down and then stops at the side of the carry-out stand 27 so that the container C is moved onto the station 37 by the pushing-out unit 32. The station 37 with the container C mounted thereon moves down to the front of the take-out conveyor 51 and the container C is transferred onto the take-out conveyor 51 by the transfer unit 38. Then, the transfer conveyor 51 conveys by the container C to the handling stand 53. On the handling stand 53, goods are taken out of the designated partitioned portion of the container C or the container C is transferred to another place to be dealt thereat.

Having been dealt on the handling stand 53, the container C is sent to the carry-out unit 56 by the take-in conveyor 54 and then mounted onto the station 58. The code mark 150 of the container C mounted on the take-in conveyor 54 is read by the reader 51 and the thus read data are supplied to the data judging circuit 152. The data judging circuit 152 compares the data stored in itself with the data supplied from the reader 151. When both data coincident with each other, the judging circuit 152 applies a signal to the drive control circuit 153 for the carry-out unit 56. Accordingly, the station 58 with the container C mounted thereon is moved to the step of the designated rotary shelf by the control circuit 153 and then the container C is transferred to the carry-out stand by the transfer unit 59 driven by the control circuit 153. On the other hand, the tray 20 onto which the container C is to be stored is stopping in the front of the carry-out stand 82 and the pushing-out unit 83 pushes the container C so as to transfer the container C onto the tray 20 from the carry-out stand 82. This operation of the tray 20 is repeated.

If no pertinent data can be located in the judging circuit 152 as the result of judgement effected by the judging circuit 152 as to the data supplied from the reader 151, the judging circuit 152 applies a signal to the error step signal memory unit 154. The memory unit 154 applies a signal to the control circuit 153. As the result, the control circuit 153 causes the station 58 with the container C mounted thereon to move up to a height of a not-designated step and causes the transfer unit 59 to transfer the container C onto the reception unit. The reception unit in turn transfers the container C to a proper position. Since this container C has a code mark 150 which is impossible to be read, the container is subject to a dealing such as replacement of the code mark 150.

As described above, according to this embodiment, the code mark 150 of a container C is read by the reader 151 when the container C is stored or taken in. The thus read-out data is supplied to the data judging circuit 152 having the data with respect to all the code marks of the containers C. In the data judging circuit 152, the data read out by the reader 151 is judged whether it is a correct one or not. If the read data is not coincident with the code of the container C, the container C is not stored in the rotary shelf but transferred to the reception unit by the transfer unit 56 for the purpose of being subject to a suitable dealing. Accordingly., it is possible to prevent occurrence of such an erroneous operation that a container C is returned to the rotary shelf on the basis of incorrect code data. Accordingly, it is possible to perform the returning operation of the container C smoothly. In addition, since the code mark 150 on a container C can be easily judged whether it becomes impossible to provide correct data due to pollution or the like every tine the container C is stored, it is possible to make easy the management of the code mark 150 on the container C as well as it is possible to make surer the smooth running of the whole system.

## Claims

1. A goods-storing system comprising:
a plurality of horizontal rotary shelves vertically stacked in steps (2), said shelves being rotatable independently of each other and being provided at their periphery with a plurality of trays (20) for storing containers (C); a carry-out unit (35) having a station (37) which are movable up and down; and a first pushing-out unit (29) for pushing-out a container (4) onto a carry-out unit (35) characterized in that a taking-out port is provided on one side of said rotary shelves, a taking-in port is provided on the other side of said rotary shelves; two carry-out units (35, 56) are respectively provided at said taking-out port and said taking-in port and said station (37, 58) is movable up and down corresponding to said respective rotary shelves; said first pushing out unit (29) is provided at said taking-out port; a conveyor (51, 54) is disposed between said carry-out units (35, 56), running around said rotary shelves and connecting said carry-out units; further pushing-out or transfer units (32, 83, 38, 59) are provided in conjunction with each of said stations (37) of said respective carry-out units (35, 56), for moving a container (4) from said station (37).

2. A goods-storing system according to claim 1, in which the rotary shelves comprise endless chains, said chains being arranged so as to be vertically piled up in a plurality of steps (2) respectively corresponding to the steps of said rotary shelves, said chains (3) being arranged each horizontally and being arranged to be turned by individual motors independently of each other, each of said chains having at least a container (C) removably supported at the outer circumference of said chain; position detecting means (13) for detecting positions of said containers are provided respectively corresponding to said steps; said carry-out units (35, 56) are disposed at a defined delivery position and said station (37) of each of said carry-out units is arranged to be movable up and down and to be capable of being stopped at a height corresponding to each of the containers (C) on said respective steps; and movement amount detecting means (135) for detecting movement amount of any one of said containers (C) which is designated at any one of said steps to said respective delivery position on the basis of a signal from said position detecting means respectively corresponding to said steps; and a control circuit (131) having means for comparing said amounts of movement of the designated ones of said containers and producing a signal corresponding to a selected one of said steps on which a designated container will first reach said delivery position and means (136, 137) for moving a station (37) of said carry-out unit to said selected step on the basis of said signal.

3. A goods-storing system according to Claim 1 or 2, in which each of said stations (37) of said respective carry-out units (35, 56) can at least turn through 90 degrees between said rotary shelves and said conveyor (51, 54).

4. A goods-storing system according to any of Claims 1 to 3, in which said carry-out unit (35, 56) are provided with a pair of endless transfer chains (47), half-shelves (48), and a conveyor unit (49), said pair of endless chains (47) being up/down rotatably disposed on opposite sides at positions in opposition to the pushing-out directions of said pushing-out units (29, 83) respectively and being turned by shafts (50) having axes parallel to the pushing-out directions of said pushing-out units (29, 83), said half-shelves (48) being horizontally stuck on the outer periphery of said respective transfer chains (47) at intervals about equivalent to the distance between the upper and lower adjacent containers (C), each of said transfer chains (47) having a length capable of stopping said half-shelves (48) respectively in the front of corresponding ones of said containers by said transfer chain, said conveyor unit (49) being disposed at a lower portion between said pair of transfer chains.

5. A goods-storing system according to any of Claims 1 to 4, in which said conveyor (51, 54) is provided with a handling stand (53) at a middle point thereof.

6. A goods-storing system according to claim 1 comprising: carry-out stand (27, 82) being provided at each rotary shelf and at both of said taking-out port and said taking-in port and being stationary and a handling stand (53) provided at a middle position of said conveyor (51, 54); wherein said carry-out units (35, 56) are respectively provided at both of said carry-out stands (27, 82), said first pushing out unit (29) is provided at said taking-out port for pushing out a container (C) onto said carry-out stand (27) at said taking-out port, second pushing-out units (32, 83) are respectively provided on said carry-out stands (27, 82) for pushing out containers from said respective carry-out stands; and third pushing-out units (38, 58) are respectively provided on said station of said respective carry-out units for pushing out container from said respective stations.

7. A goods-storing system according to Claim 6, in which said rotary shelves are provided with endless chains (3) and a pair of support arms (4), said pair of support arms being stuck on a frame (1) at the end portion thereof on the center side in the lengthwise direction of said endless chains (3), said endless chains being turned by shafts (5) and sprocket wheels mounted hereon, said shafts being (5) vertically provided on the free end portions of said support arms (4), said trays (20) being mounted on said endless chains (3).

8. A goods-storing system according to Claim 7, in which said rotary shelves are provided with bearings (9) and mount pads (10), said bearings (9) being provided for said shafts (5) of said sprocket wheels (6) for turning said trays (20) of said rotary shelves by said chains (3) and being movable in the lengthwise direction of the chains, said mount pads (10) being provided for motors (8) for driving said shafts and being movable in the same direction.

9. A goods-storing system according to any of Claims 6 to 8, in which each of said trays (20) is provided for removably mounting a container (C) being firmly attached onto an endless chain (3) at one end of its bottom and being disposed on the outer periphery of said chain; and wheels (23) having their axes put in the widthwise direction of said chain (3) are mounted on opposite ends of the bottom lower surface of said respective tray (20) in the widthwise direction of said chain on the outer periphery of said chain and are put on horizontal rails (25, 26).

10. A goods-storing system according to any of claims 6 to 9, in which said rotary shelves comprise: a control circuit (123) for changing over the turn speed of the respective chains (3) to a low speed when a designated container (C) approaches the delivery position, (117) that is, reaches a speed change-over position (120) during movement of the container, having position detecting means (119) for detecting distances to defined delivery positions (117) from the respective trays (20) mounted in alignement on endless chains forcedly horizontally turned by respective motors (8); and deceleration signal output means (121) for producing a deceleration signal upon detecting an amount of movement of a designated tray (20) as an arrival time of said tray at a defined position or as a distance to said position when the control unit (100) has designated the tray (20) between delivery positons (117) and said speed change-over position (120) or in the vicinity thereof (3) whereby the turnspeed of the chains is reduced by said control circuit (123) on the basis of said deceleration signal.

11. A goods-storing system according to Claim 10, in which said deceleration signal output means (121) are constituted by sensors each for detecting passage or the like of actuators provided on turning portions of said trays (20) to thereby produce a signal.

12. A goods-storing system according to any of Claims 1 to 11, in which the inside of a container (C) is partitioned into a plurality of portions; the container has means (149) for indicating the direction of the container; detecting means (140) are provided for detecting said direction; and a display unit (143) is provided for displaying the position of the inside of the container.

13. A goods-storing system according to any of Claims 6 to 12, in which said carry-out stands are provided in a plurality of steps corresponding to the step number and height of said respective rotary shelves and have said pushing-out units for pushing out containers therefrom.

14. A goods-storing system according to Claim 13, in which said pushing units (83′) have a support rail (87), a movable body (90) forcedly movably hung down from said support rail, and a pair of link bars (88) mutually pivoted through a shaft at the middle thereof and disposed between said movable body (90) and a pole (89), one of said link bars (88) having one end pivotally attached on said pole (89) and the other end slidably attached on said movable body (90), the other of said link bars having one end pivotally attached on said movable body (90) and the other end slidably attached on to said pole (89), said movable body (90) having a surface opposite to said link bars, said movable body being provided on said surface with pushing-out means such as an air-cylinder (97).

15. A goods-storing system according to any of Claims 6 to 12, in which said carry-out units (56) have stations (58) up/down movable with respect to a pole (57), a pair of transfer units (59), provided on both sides of the upper surface of said respective station (58) and parallelly to said respective chains (3) of said rotary shelves, and U-shaped grooves (61) provided between said transfer units (59) to provide pushing-out units (60) movable frontward and backward in said grooves (61).

16. A goods-storing system according to claim 15, in which pushing-out means (67, 68) is slidably mounted on guide rods (66) horizontally provided on the upper surface of a station (56′), for push a container (C), a support rod (78) is vertically stuck on said pushing-out means (67, 68), and a connection (77) is slidably mounted on said support rod (78) and is pivotally mounted on an endless chain extending in the direction of the guide rods (66), whereby said pushing-out means (67, 68) is slided by moving said chain.

17. A goods-storing system according to Claim 16, in which said pushing-out means comprises a support (67) mounted on the guide rod (66), and a pushing arm (68) up/down movably mounted thereon.

**Revendications**

1. Installation de stockage de marchandises, comprenant:
plusieurs rayonnages rotatifs horizontaux empilés verticalement en étages (2), les rayonnages pouvant tourner indépendamment les uns des autres et ayant, à leur périphérie, des plateaux (20) destinés à stocker des conteneurs (C),
un ensemble de manutention (35) ayant un poste (37) qui est mobile verticalement, et un premier ensemble de poussée (29) destiné à pousser un conteneur (C) sur un ensemble de manutention (35), caractérisé en ce que
un orifice d'extraction est placé d'un côté des rayonnages rotatifs,
un orifice d'introduction est placé de l'autre côté des rayonnages rotatifs,
deux ensembles de manutention (35, 56) sont disposés respectivement à l'orifice d'extraction et à l'orifice d'introduction et le poste (37, 58) est mobile verticalement afin qu'il prenne des positions correspondant aux rayonnages rotatifs respectifs, le premier ensemble de poussée (29) est placé à l'orifice d'extraction,

un transporteur (51, 54) est placé entre les ensembles de manutention (35, 56) et se déplace autour des rayonnages rotatifs et relie les ensembles de manutention, et

d'autres ensembles de poussée ou de transfert (32, 83, 38, 59) sont placés en coopération avec chacun des postes (37) des ensembles respectifs de manutention (35, 56) afin qu'ils déplacent un conteneur (C) à partir dudit poste (37).

2. Installation de stockage de marchandises selon la revendication 1,

dans laquelle les rayonnages rotatifs comportent des chaînes sans fin (3), les chaînes étant disposées afin qu'elles soient empilées verticalement en plusieurs étages (2) correspondant respectivement aux étages des rayonnages rotatifs, les chaînes (3) étant disposées chacune horizontalement et étant destinées à être entraînées en rotation par des moteurs individuels indépendamment les unes des autres, chacune des chaînes ayant au moins un conteneur (C) supporté de façon amovible à la circonférence externe de la chaîne, un dispositif (133) de détection des positions des conteneurs est prévu en des positions correspondant aux étages,

les ensembles de manutention (35, 56) ont une position déterminée de distribution et le poste (37) de chaque ensemble de manutention est destiné à se déplacer verticalement et peut être arrêté à une hauteur correspondant à chacun des conteneurs (C) des étages respectifs, et

un dispositif (135) est destiné à détecter l'amplitude de déplacement de l'un quelconque des conteneurs (C) qui est désigné à l'un quelconque des étages jusqu'à la position respective de distribution d'après un signal provenant du dispositif de détection de position et correspondant aux étages, et

un circuit de commande (131) comporte un dispositif de comparaison de l'amplitude de déplacement des conteneurs désignés et de création d'un signal correspondant à un étage choisi auquel un conteneur désigné atteint en premier la position de distribution, et un dispositif (136, 137) est destiné à déplacer un poste (37) de l'ensemble de manutention à l'étage choisi en fonction dudit signal.

3. Installation de stockage de marchandises selon la revendication 1 ou 2, dans laquelle chacun des postes (37) des ensembles respectifs de manutention (35, 56) peut au moins tourner de 90° entre les rayonnages rotatifs et le transporteur (51, 54).

4. Installation de stockage de marchandises selon l'une quelconque des revendications 1 à 3, dans laquelle les ensembles de manutention (35, 56) ont une paire de chaînes sans fin de transfert (47), des demi-étagères (48) et un ensemble transporteur (49), la paire de chaînes sans fin (47) pouvant tourner en se déplaçant en direction verticale, les chaînes étant placées de part et d'autre d'emplacements disposés dans les directions de poussée des ensembles de poussée (29, 83) respectivement et étant entraînées en rotation par des arbres (50) ayant des axes parallèles aux directions de poussée des ensembles de poussée (29, 83), les demi-étagères (48) étant fixées horizontalement à la périphérie externe des chaînes respectives de transfert (47) à des intervalles équivalant à peu près à la distance comprise entre les conteneurs adjacents supérieur et inférieur (C), chacune des chaînes de transfert (47) ayant une longueur telle qu'elle peut arrêter les demi-étagères (48) devant les conteneurs correspondants déplacés par la chaîne de transfert, l'ensemble transporteur (49) étant disposé à une partie inférieure entre les deux chaînes de transfert.

5. Installation de stockage de marchandises selon l'une quelconque des revendications 1 à 4, dans laquelle le transporteur (51, 54) a un tablier de manutention (53) dans sa partie médiane.

6. Installation de stockage de marchandises selon la revendication 1, comprenant:

des râteliers (27, 82) ayant des étagères de manutention, placés au niveau de chaque rayonnage rotatif et des orifices d'extraction et d'introduction et qui sont fixes, et un tablier de manutention (53) occupant une position médiane dans le transporteur (51, 54), des ensembles de manutention (35, 56) étant placés respectivement au niveau des deux râteliers de manutention (27, 82), le premier ensemble de poussée (29) étant placé au niveau de l'orifice d'extraction afin qu'il pousse un conteneur (C) sur le râtelier de manutention (27) qui se trouve à l'orifice d'extraction, des seconds ensembles de poussée (32, 83) étant disposés;

respectivement au niveau des râteliers de manutention (27, 82) afin qu'ils poussent les conteneurs vers l'extérieur des râteliers de manutention respectifs,

et des troisièmes ensembles de poussée (38, 58) étant disposés auxdits postes des ensembles respectifs de manutention afin qu'ils poussent un conteneur hors des postes respectifs.

7. Installation de stockage de marchandises selon la revendication 6, dans laquelle des rayonnages rotatifs sont munis de chaînes sans fin (3) et de deux bras de support (4), les deux bras de support étant fixés à un bâti (1) à leur partie d'extrémité, dans la région centrale dans la direction longitudinale des chaînes sans fin (3), les chaînes sans fin étant entraînées en rotation par des arbres (5) et des roues (6) à chaîne montées sur les arbres, les arbres (5) étant disposés verticalement sur les parties libres d'extrémité des bras de support (4), les plateaux (20) étant montés sur les chaînes sans fin (3).

8. Installation de stockage de marchandises selon la revendication 7, caractérisée en ce que les rayonnages rotatifs ont des paliers (9) et des patins de montage (10), les paliers (9) étant munis des arbres (5) des roues (6) à chaînes afin que les plateaux (20) des rayonnages rotatifs soient entraînés en rotation par les chaînes (3) et puissent se déplacer dans la direction longitudinale des chaînes, les patins de montage (10) étant munis de moteurs (8) assurant l'entraînement des arbres et mobiles dans la même direction.

9. Installation de stockage de marchandises selon l'une quelconque des revendications 6 à 8, dans laquelle chaque plateau (20) est destiné à supporter temporairement un conteneur (C), est fermement fixé à une chaîne sans fin (3) à une extrémité de sa partie inférieure, et est placé à la périphérie externe de la chaîne, et des roues (23) ayant des axes disposés en direction latérale par rapport à la chaîne (3) sont montées aux extrémités opposées de la surface inférieure du plateau respectif (20) dans la direction de la largeur de la chaîne à la périphérie externe de la chaîne et sont placées sur des rails horizontaux (25, 26).

10. Installation de stockage de marchandises selon l'une quelconque des revendications 6 à 9, dans laquelle les rayonnages rotatifs comprennent:

un circuit de commande (123) destiné à commuter la vitesse de rotation des chaînes respectives (3) à une faible vitesse lorsqu'un conteneur désigné (C) se rapproche de la position de distribution (117), c'est-à-dire atteint une position de commutation de vitesse (120) au cours du déplacement du conteneur, le circuit comprenant un dispositif de détection de position (119) destiné à détecter les distances jusqu'à des positions déterminées de distribution (117) à partir des plateaux respectifs (20) montés dans l'alignement sur les chaînes sans fin et entraînés en rotation horizontalement par des moteurs respectifs (8), et

un dispositif (121) de transmission de signaux de décélération destiné à créer un signal de décélération après la détection d'un déplacement du plateau désigné (20), déterminant le moment d'arrivée du plateau à une position déterminée ou à une certaine distance de cette position lorsque l'ensemble de commande (100) a désigné le plateau (20), entre les positions de distribution (117) et la position de commutation de vitesse (120) ou à son voisinage, si bien que la vitesse de rotation des chaînes est réduite par le circuit de commande (123) en fonction du signal de décélération.

11. Installation de stockage de marchandises selon la revendication 10, dans laquelle le dispositif (121) de transmission du signal de décélération est constitué par des capteurs détectant chacun le passage ou analogue d'organes de manœuvre placés sur des parties mobiles des plateaux (20) afin qu'un signal soit créé.

12. Installation de stockage de marchandises selon l'une quelconque des revendications 1 à 11, dans laquelle l'intérieur d'un conteneur (C) est cloisonné en plusieurs parties, le conteneur comportant un dispositif (149) destiné à indiquer la direction du conteneur, un dispositif de détection (140) est destiné à détecter ladite direction, et un ensemble d'affichage (143) est destiné à afficher la position de l'intérieur du conteneur.

13. Installation de stockage de marchandises selon l'une quelconque des revendications 6 à 12, dans laquelle les râteliers de manutention sont disposés en plusieurs étages correspondant au numéro d'étage et à la hauteur des rayonnages rotatifs respectifs et ont les ensembles destinés à pousser les conteneurs à partir des rayonnages.

14. Installation de stockage de marchandises selon la revendication 13, dans laquelle les ensembles de poussée (83') ont un rail de support (87), un corps mobile (90) suspendu au rail de support afin qu'il puisse être déplacé à force, et deux barres (88) formant des bielles articulées par un arbre à leur partie médiane et placées entre le corps mobile (90) et un poteau (89), l'une des barres (88) ayant une première extrémité articulée sur le poteau (89) et une autre extrémité qui peut coulisser sur le corps mobile (90), l'autre barre ayant une première extrémité articulée sur le corps mobile (90) et son autre extrémité qui peut coulisser sur le poteau (89), le corps mobile (90) ayant une surface opposée aux barres, le corps mobile étant muni, sur ladite surface, de dispositifs de poussée, tels qu'un vérin pneumatique (97).

15. Installation de stockage de marchandises selon l'une quelconque des revendications 6 à 12, dans laquelle les ensembles de manutention (56) ont des postes (58) mobiles verticalement par rapport à un poteau (57), deux ensembles de transfert (59) placés des deux côtés de la surface supérieure du poste respectif (58) et parallèlement aux chaînes respectives (3) des rayonnages rotatifs, et des gorges en U (61) placées entre les ensembles de transfert (59) et permettant le déplacement d'ensembles de poussée (60) mobiles vers l'avant et vers l'arrière dans ces gorges (61).

16. Installation de stockage de marchandises selon la revendication 15, dans laquelle des dispositifs de poussée (67, 68) sont montés afin qu'ils puissent coulisser sur des tiges de guidage (66) disposées horizontalement à la face supérieure du poste (56') afin qu'ils repoussent un conteneur (C), une tige de support (78) est fixée verticalement aux dispositifs de poussée (67, 68) et une connexion (77) est montée sur la tige de support (78) afin qu'elle puisse coulisser et est articulée sur une chaîne sans fin disposée dans la direction des tiges de guidage (66), si bien que les dispositifs de poussée (67, 68) peuvent coulisser lors du déplacement de la chaîne.

17. Installation de stockage de marchandises selon la revendication 16, dans laquelle les dispositifs de poussée comportent un support (67) monté sur la tige de guidage (66), et un bras de poussée (68) mobile verticalement peut se déplacer sur la tige.

**Patentansprüche**

1. Warenlagersystem mit:

mehreren waagerechten Drehregalen, die übereinander in Stufen (2) gestapelt sind, wobei die Regale unabhängig voneinander drehbar sind und in ihrem Außenbereich mit mehreren Kästen (20) zum Lagern von Containern (C) versehen sind,

einer Ausgabeeinheit (35) mit einer Station (37), die auf- und abbewegbar ist,

einer ersten Ausstoßeinheit (29) zum Ausstoßen eines Containers (C) auf eine Ausgabeeinheit (35), dadurch gekennzeichnet, daß

ein Abgabetor an einer Seite der Drehregale vorgesehen ist,

ein Aufnahmetor an der anderen Seite der Drehregale vorgesehen ist,

zwei Ausgabeeinheiten (35, 56) jeweils an dem Abgabetor und dem Aufnahmetor vorgesehen sind und die Station (37, 58) entsprechend den jeweiligen Drehregalen auf- und abbewegbar sind, wobei die erste Ausstoßeinheit (29) an dem Ausgabetor vorgesehen ist;

eine Fördereinrichtung (51, 54) zwischen den Ausgabeeinheiten (35, 56) angeordnet ist, die um die Drehregale herumläuft und die Ausgabeeinheiten verbindet,

weitere Ausstoß oder Weitergabeeinheiten (32, 83, 38, 59) in Verbindung mit jeder der Stationen (37) der jeweiligen Ausgabeeinheiten (35, 56) vorgesehen sind, zum Bewegen eines Containers (C) von der Station (37).

2. Warenlagersystem nach Anspruch 1, wobei die Drehregale Endlosketten (3) aufweisen, wobei die Ketten so angeordnet sind, daß sie vertikal übereinander in mehreren Stufen (2), die jeweils den Stufen der Drehregale entsprechen, angeordnet sind, wobei die Ketten (3) jeweils waagerecht angeordnet sind und jeweils unabhängig voneinander durch Einzelmotoren gedreht werden können, wobei jede der Ketten mindestens einen Container (C) hat, der abnehmbar an dem äußeren Umfang der Kette gehalten wird, wobei Positionserkennungseinrichtungen (133) zum Erkennen von Positionen der Container jeweils den Stufen entsprechend vorgesehen sind,

die Ausgabeeinheiten (35, 56) an einer bestimmten Auslieferstelle angeordnet sind und die Station (37) jeder Ausgabeeinheit so angeordnet ist, daß sie auf- und abbewegbar ist und in einer Höhe angehalten werden kann, die einer der Container (C) an den jeweiligen Stufen entspricht,

und mit Bewegungsumfang-Erkennungseinrichtungen (135) zum Erkennen des Bewegungsumfangs von einem der Container (C), der an einer der Stufen für die jeweilige Lieferposition bestimmt ist, auf der Basis eines Signals von der Positionserkennungseinrichtung, die der jeweiligen Stufe entspricht,

und einer Steuerschaltung (131) mit Einrichtungen zum Vergleichen der Bewegungsumfänge der bestimmten Container und Erzeugen eines Signals entsprechend einer ausgewählten Stufe, an der der bestimmte Container zuerst die Lieferposition erreicht, und Einrichtungen (136, 137) zum Bewegen einer Station (37) der Ausgabeeinheit zu der ausgewählten Stufe auf der Basis des Signals.

3. Warenlagersystem nach Anspruch 1 oder 2, wobei jede der Stationen (37) der jeweiligen Ausgabeeinheiten (35, 56) mindestens um 90° zwischen den Drehregalen und der Fördereinrichtung (51, 54) drehen kann.

4. Warenlagersystem nach einem der Ansprüche 1 bis 3, wobei die Ausgabeeinheiten (35, 56) mit zwei endlosen Beförderungsketten (47), Halbregalen (48) und einer Fördereinheit (49) versehen sind, wobei die zwei Endlosketten (47) auf- und abdrehbar an gegenüberliegenden Seiten angeordnet sind an Positionen gegenüber den Ausstoßrichtungen der jeweiligen Ausstoßeinheiten (29, 83) und mittels Wellen (50) gedreht werden, mit Achsen, die parallel zu den Ausstoßrichtungen der Ausstoßeinheiten (29, 83) sind, wobei die Halbregale (48) waagerecht übereinander gestapelt sind in den Außenbereich der zugehörigen Förderketten (47) in Abständen etwa gleich dem Abstand zwischen dem oberen und dem unteren benachbarten Container (C), wobei jede der Förderketten (47) eine solche Länge hat, daß die Halbregale jeweils vor dem entsprechenden Container mittels der Förderkette angehalten werden können, wobei die Fördereinheit (49) in einem unteren Abschnitt zwischen den zwei Förderketten angeordnet ist.

5. Warenlagersystem nach einem der Ansprüche 1 bis 4, wobei die Fördereinrichtung (51, 54) mit einem Bedienstand (53) an einem Mittelpunkt versehen ist.

6. Warenlagersystem nach Anspruch 1 mit:

Ausgabeständen (27, 82), die an jedem Drehregal und an sowohl dem Abgabetor als auch dem Aufnahmetor vorgesehen sind und stationär sind, und einem Bedienstand (53), der an einer Mittelposition der Fördereinrichtung (51, 54) bereitgestellt ist, wobei die Ausgabeeinrichtungen (35, 56) jeweils an beiden der Ausgabestände (27, 82) vorgesehen sind, wobei die erste Ausstoßeinheit (29) an dem Abgabetor zum Ausstoßen eines Containers (C) auf den Ausgabestand (27) an dem Abgabetor vorgesehen ist,

zweite Ausstoßeinheiten (32, 83), die jeweils an den Ausgabeständen (27, 82) zum Ausstoßen von Containern von den jeweiligen Ausgabeständen vorgesehen sind, und

dritten Ausstoßeinheiten (38, 58), die jeweils an der Station der jeweiligen Ausgabeeinheiten zum Ausstoßen von Containern von den jeweiligen Stationen vorgesehen sind.

7. Warenlagersystem nach Anspruch 6, wobei die Drehregale mit Endlosketten (3) und zwei Stützarmen (4) versehen sind, wobei die zwei Stützarme an einem Rahmen (1) an dessem Endabschnitt auf der Mittelseite in der Längsrichtung der Endlosketten (3) befestigt sind, wobei die Endlosketten durch Wellen (5) und daran befestigten Zahnrädern (6) gedreht werden, wobei die Wellen (5) senkrecht an den freien Endabschnitten der Stützarme (4) vorgesehen sind, wobei die Kästen (20) an den Endlosketten (3) befestigt sind.

8. Warenlagersystem nach Anspruch 7, wobei die Drehregale mit Lagern (9) und Befestigungskissen (10) versehen sind, wobei die Lager (9) für die Wellen (5) der Zahnräder (6) vorgesehen sind zum Drehen der Kästen (20) der Drehregale durch die Ketten (3) und in der Längsrichtung der Ketten bewegbar sind, wobei die Befestigungskissen (10) für Motoren (8) zum Antreiben der Wellen vorgesehen sind und in der gleichen Richtung bewegbar sind.

9. Warenlagersystem nach einem der Ansprüche 6 bis 8, wobei jeder der Kästen (20) vorgesehen ist zum abnehmbaren Befestigen eines Containers (C), der fest an einer Endloskette (3) an einem Ende seines Bodens befestigt ist, und im Außenbereich der Kette angeordnet ist, und wobei Räder (23), deren Achsen in der Breitenrichtung der Kette (3) angeordnet sind, an gegenüberliegenden Enden an der Bodenunterfläche des jeweiligen Kastens (20) in der Breitenrichtung der Kette im Außenbereich der Kette befestigt sind und auf waagerechte Schienen (25, 26) gesetzt sind.

10. Warenlagersystem nach einem der Ansprüche 6 bis 9, wobei die Drehregale aufweisen:

eine Steuerschaltung (123) zum Ändern der Drehgeschwindigkeit der jeweiligen Ketten (3) in eine niedrige Geschwindigkeit, wenn ein bestimmter Container (C) die Lieferposition (117) erreicht, d.h. während der Bewegung des Containers eine Geschwindigkeitsveränderungsstelle (120) erreicht, mit Positionserkennungseinrichtungen (119) zum Erkennen von Abständen zu bestimmten Lieferpositionen (117) von den jeweiligen Kästen (20), die ausgerichtet an Endlosketten befestigt sind, die von jeweiligen Motoren (8) waagerecht angetrieben werden, und Verzögerungssignalausgabeeinrichtungen (121) zum Erzeugen eines Verzögerungssignals nach Erkennen des Bewegungsumfangs eines bestimmten Kastens (20) als eine Ankunftzeit des Kastens an einer bestimmten Position, oder als ein Abstand zu der Position, wenn die Steuereinheit (100) den Kasten (20) zwischen Lieferpositionen (117) und der Geschwindigkeitsveränderungsstelle (120) oder in dessen Nähe bezeichnet hat, wodurch die Drehgeschwindigkeit der Ketten von der Steuerschaltung (123) auf der Basis des Verzögerungssignals verringert wird.

11. Warenlagersystem nach Anspruch 10, wobei die Verzögerungssignalausgabeeinrichtungen (121) von Sensoren jeweils zum Erkennen des Durchgangs oder ähnlichen Betätigungselementen gebildet werden, die an Drehabschnitten der Kästen (20) vorgesehen sind, wodurch ein Signal erzeugt wird.

12. Warenlagersystem nach einem der Ansprüche 1 bis 11, wobei das Innere eines Containers (C) in mehrere Abschnitte unterteilt ist, der Container Einrichtungen (149) aufweist zum Anzeigen der Richtung des Containers, Erkennungseinrichtungen (140) zum Erkennen dieser Richtung bereitgestellt sind, und eine Anzeigeeinheit (143) zum Anzeigen der Position der Innenseite des Containers vorgesehen ist.

13. Warenlagersystem nach einem der Ansprüche 6 bis 12, wobei die Ausgabestände in mehreren Stufen entsprechend der Stufenzahl und Höhe der jeweiligen Drehregale vorgesehen sind und Ausstoßeinheiten zum Ausstoßen von Containern aufweist.

14. Warenlagersystem nach Anspruch 13, wobei die Ausstoßeinheiten (83') eine Stützschiene (87), einen bewegbaren Körper (90), der von der Stützschiene herunterhängt und kraftmäßig bewegbar ist und zwei Verbindungsstangen (88) aufweisen, die miteinander über eine Welle an deren Mitte gelenkig verbunden sind und zwischen dem bewegbaren Körper (90) und einem Pfosten (89) angeordnet sind, wobei eine der Verbindungsstangen (88) mit einem Ende schwenkbar an dem Pfosten (89) befestigt ist und mit dem anderen Ende verschiebbar an dem bewegbaren Körper (90) angebracht ist, die andere der Verbindungsstangen mit einem Ende verschwenkbar an dem bewegbaren Körper (90) befestigt ist und mit dem anderen Ende verschiebbar an dem Pfosten (89) angebracht ist, wobei der bewegbare Körper (90) eine den Verbindungsstangen gegenüberliegende Fläche aufweist, wobei der bewegbare Körper an dieser Fläche mit Ausstoßeinrichtungen, wie einem Luftzylinder (97), versehen ist.

15. Warenlagersystem nach einem der Ansprüche 6 bis 12, wobei die Ausgabeeinheiten (56) Stationen (58) aufweisen, die in Bezug auf einen Pfosten (57) auf- und abbewegbar sind, zwei Fördereinheiten (59), die an beiden Seiten der oberen Fläche der jeweiligen Station (58) und parallel zu den jeweiligen Ketten (3) der Drehregale vorgesehen sind, und U-förmige Nuten (61), die zwischen den Fördereinheiten (59) vorgesehen sind, zum Bereitstellen von Ausstoßeinheiten (60), die in den Nuten (61) vorwärts und rückwärts bewegbar sind.

16. Warenlagersystem nach Anspruch 15, wobei die Ausstoßeinrichtung (67, 68) verschiebbar an Führungsstäben (66) befestigt sind, die waagerecht an der oberen Fläche einer Station (56') vorgesehen sind, zum Ausstoßen eines Containers (C), ein Stützstab (78) senkrecht an den Ausstoßeinrichtungen (67, 68) befestigt ist, und eine Verbindung (77) gleitend an dem Stützstab (78) befestigt ist, und an einer Endloskette, die sich in der Richtung der Führungsstäbe (66) erstreckt, schwenkbar befestigt ist, wodurch die Ausstoßeinrichtungen (67, 68) durch Bewegen der Kette verschoben wird.

17. Warenlagersystem nach Anspruch 16, wobei die Ausstoßeinrichtung eine an dem Führungsstab (66) befestigte Stütze (67) und einen daran auf- und abbewegbar befestigten Stoßarm (68) aufweist.

FIG.1

FIG.2

FIG.3

FIG.4

FIG.5

FIG.6

FIG.7

EP 0 242 409 B1

# F I G. 8

# F I G. 9

FIG.11

FIG.10

FIG.12

FIG.13

FIG.14

FIG.15

FIG.16

EP 0 242 409 B1

FIG.20

FIG.17

85
82

85
82

56 58 59

59

54

57

35'

41

43

41

42

40

EP 0 242 409 B1

FIG. 19

FIG.18

EP 0 242 409 B1

FIG.22

FIG.21

FIG. 26

FIG.23

FIG. 24

FIG. 27

FIG. 25

EP 0 242 409 B1

# FIG.28

# FIG. 29

# FIG. 30

FIG. 31

FIG. 32

FIG. 33

## FIG. 34

## FIG. 35

## FIG. 36

# FIG. 37

# FIG. 38

FIG.39

FIG.40

FIG.41

FIG.42

FIG.43